# EUROPEAN PATENT APPLICATION

(11) **EP 4 730 677 A2**
(43) Date of publication of application: **22.04.2026**
(21) Application number: 26162702.0
(22) Date of filing: 21.04.2023
(51) Int. Cl.: H04B 17/354

(54) **SENSING-BASED INTERFERENCE MITIGATION IN NR DUPLEX**

(30) Priority: 26.04.2022 US 202263334991 P
(62) Divisional of application: 23724999.0
(71) Applicant: InterDigital Patent Holdings, Inc., Wilmington, DE 19809 (US)
(72) Inventor: KHAN BEIGI, Nazli, Montreal, H3A 3G4 (CA); PARK, Jonghyun, New York, 10120 (US); LEE, Moon-il, New York, 10120 (US); MARINIER, Paul, Montreal, H3A 3G4 (CA)
(74) Representative: AWA Sweden AB

(57) **Abstract**

A wireless transmit/receive unit (WTRU) may include a processor that is configured to receive configuration information indicating a plurality of sub-bands for cross-link interference (CLI) measurements and respective resources for performing CLI measurements for each of the plurality of sub-bands. The processor may receive a downlink control information (DCI) indicating resources associated with a first reference sub-band. The processor may perform a CLI measurement for the first reference sub-band using one or more resources for performing CLI measurements for the first sub-band. The processor may perform a CLI measurement for at least one other sub-band of the plurality of sub-bands using the respective resources for CLI measurements of the at least one other sub-band based on determining that the CLI measurement for the first sub-band is greater than a threshold. The processor may send an indication that the CLI measurement for the sub-band is greater than the threshold.

## Description

### CROSS-REFERENCE TO RELATED APPLICATIONS

This application claims priority to U.S. Provisional Application No. 63/334,991, filed on April 26, 2022, the entirety of which are incorporated herein by reference.

### BACKGROUND

Wireless communication has been one of the most successful innovations in modern history. The demand of wireless data traffic is rapidly increasing due to the growing popularity among consumers and businesses of smart phones and other mobile data devices, such as tablets, note pad computers, net books, eBook readers, and machine type of devices. To meet the high growth in mobile data traffic and support new applications and deployments, improvements in radio interface efficiency and coverage is of vital importance.

### SUMMARY

The present disclosure relates generally to a device, method, and systems for handling interference. More specifically, the present disclosure relates to mitigating interference in NR-duplex. For instance, the disclosure provides, among other things, subband-wise channel and/or interference sensing at the victim wireless transmit/receive unit (WTRU). In another instance, the disclosure provides, among other things, subband avoidance reporting after sensing (ARAS). Moreover, the disclosure provides, among other things, transmission yielding after sensing at the aggressor WTRU. Further, the disclosure provides, among other things, directional CLI sensing and measurement.

In one or more aspects, the disclosure relates to a method and apparatus implemented to mitigate interference in an NR-duplex. For example, a victim WTRU receives measurement and reporting configuration(s) for one or more reference subbands. The victim WTRU, in an example, receives a trigger to sense/measure an interference sensing/measurement. The victim WTRU, in an example, measures Cross Link Interference - Received Signal Strength Indicator (CLI-RSSI) or Sounding Reference Signal - Reference Signal Received Power (SRS-RSRP) over configured frequency/subband resources. The victim WTRU, in an example, reports the CLI-RSSI or SRS-RSRP measurement via an L1 signaling. The victim WTRU, in an example, requests to switch to another reference subband when the WTRU has not sensed the interference.

In one or more aspects, an aggressor WTRU, in an example, determines one or more reference sub-bands to which the WTRU may switch to when CLI is caused for a victim WTRU in an active SB. The aggressor WTRU, in an example, performs event-based CLI/channel occupancy sensing in the active SB.

In one or more aspects, the WTRU receives group-common DCI. The WTRU, in an example, measures SRS-RSRP from one or more aggressor WTRUs based on directional measurement. The WTRU, in an example, reports the directional CLI/channel sensing.

A wireless transmit/receive unit (WTRU) may include a processor that is configured to receive configuration information indicating a plurality of sub-bands for cross-link interference (CLI) measurements and respective resources for performing CLI measurements for each of the plurality of sub-bands. The processor may receive a downlink assignment and/or downlink control information (DCI) that indicates resources associated with a first reference sub-band. The processor may perform a CLI measurement for the first reference sub-band using one or more resources for performing CLI measurements for the first sub-band. The processor may perform a CLI measurement for at least one other sub-band of the plurality of sub-bands using the respective resources for CLI measurements of the at least one other sub-band based on determining that the CLI measurement for the first sub-band is greater than a threshold. The processor may send an indication that the CLI measurement for the sub-band is greater than the threshold.

The processor may be configured to send information indicating a second sub-band. The indicated second sub-band is determined to have a lowest measured CLI among the plurality of sub-bands.

The processor may be configured to perform the CLI measurement for the first sub-band based on any combination of factors, such as a number of downlink data reception failures for the first sub-band exceeds a first threshold, a number of Hybrid Automatic Repeat Request Negative Acknowledgements (HARQ NACKs) sent by the WTRU for transmissions in the first sub-band exceeds a second threshold, and/or an explicit indication that is received from a network.

The respective resources for performing CLI measurements for each of the plurality of sub-bands may include one or more of a zero power channel state information reference signal (ZP-CSI-RS), a non-zero power channel state information reference signal (NZP-CSI-RS), or a sounding reference signal (SRS).

The DCI may include a downlink (DL) assignment indicating the first reference sub-band to schedule a physical downlink shared channel (PDSCH).

The processor may be configured to perform the CLI measurement for the at least one other sub-band by performing one or more of a physical layer cross-link interference received signal strength indicator (L1-CLI-RSSI) measurement, a sub-band-wise CLI measurement, and/or a delta CLI measurement. In some examples, the CLI measurement may include an overlapping CLI, a partial overlapping CLI, or a non-overlapping sub-band CLI.

### BRIEF DESCRIPTION OF THE DRAWINGS

A more detailed understanding may be had from the following description, given by way of example in conjunction with the accompanying drawings, in which like reference numerals in the figures indicate like elements.
FIG. 1A is a system diagram illustrating an example communications system in which one or more disclosed embodiments may be implemented.
FIG. 1B is a system diagram illustrating an example wireless transmit/receive unit (WTRU) that may be used within the communications system illustrated in FIG. 1A .
FIG. 1C is a system diagram illustrating an example radio access network (RAN) and an example core network (CN) that may be used within the communications system illustrated in FIG. 1A.
FIG. 1D is a system diagram illustrating a further example RAN and a further example CN that may be used within the communications system illustrated in FIG. 1A.
FIG. 2 is a diagram illustrating an example of Cross Link Interference (CLI) directional sensing.
FIG. 3 is a diagram illustrating an example of Cross Division Duplex (XDD).
FIG. 4 is a diagram illustrating an example of Cross Link Interference (CLI), inter-gNBs and inter-WTRUs.

### DETAILED DESCRIPTION

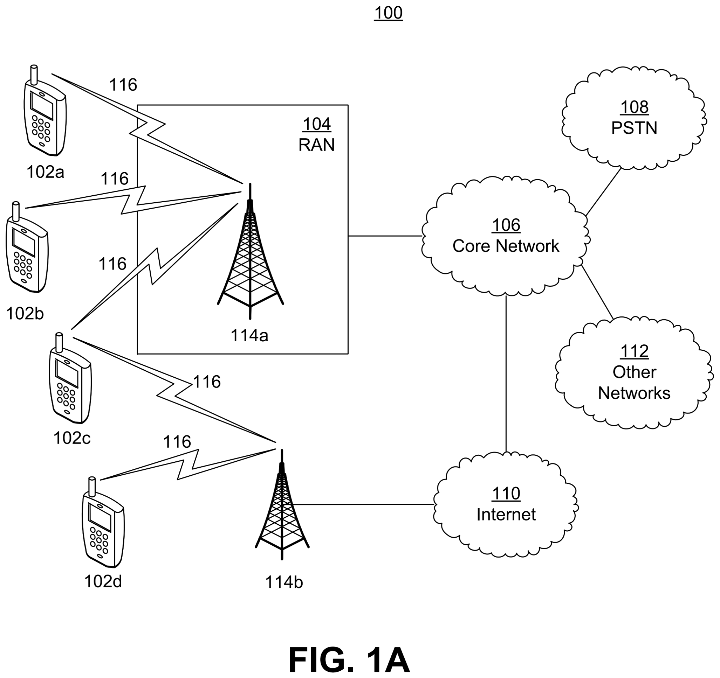

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

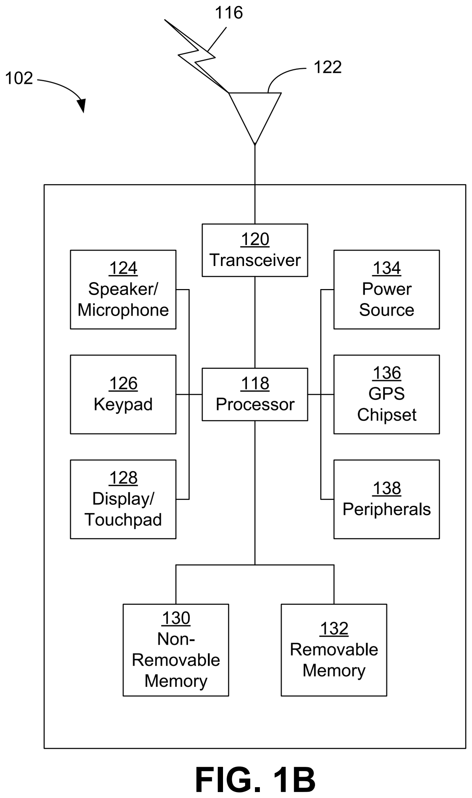

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit 139 to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

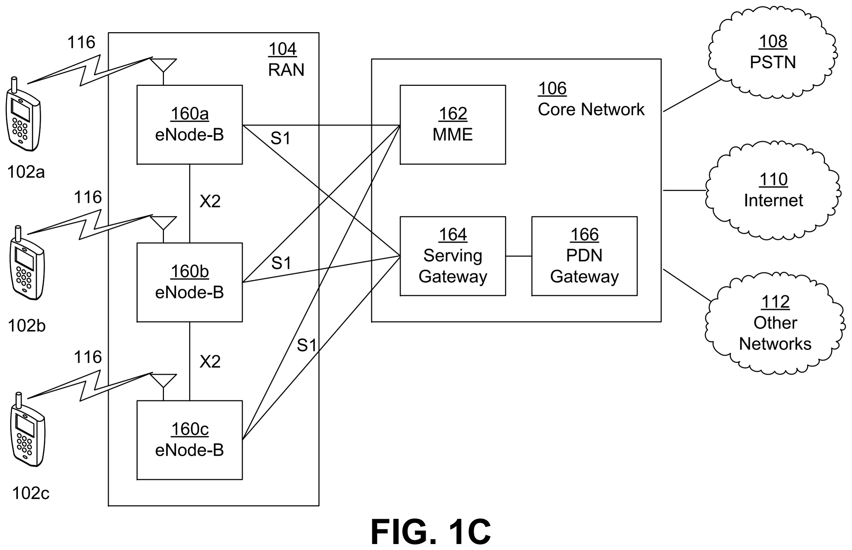

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

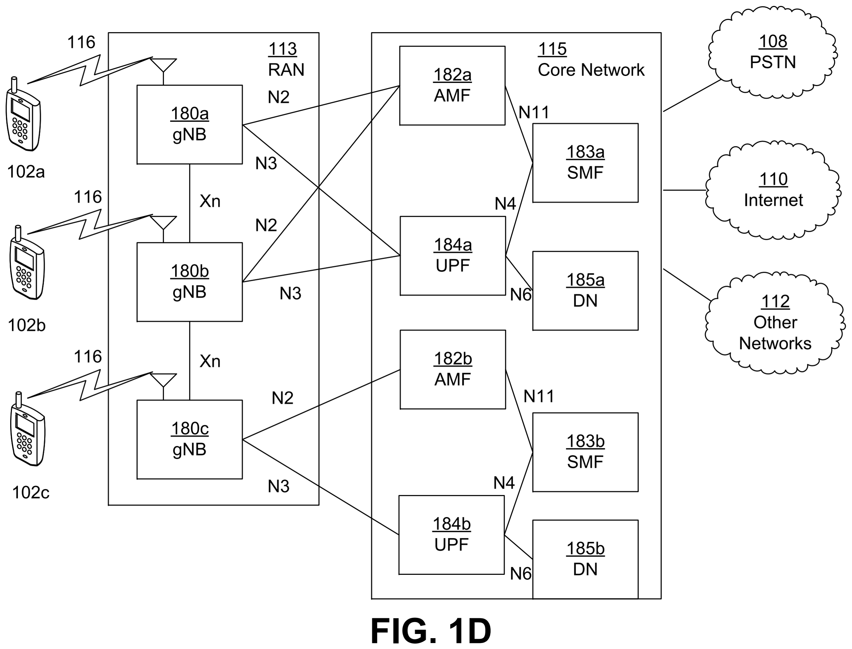

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating WTRU IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-ab, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

The following abbreviations and acronyms, among others, are used herein: Sub-carrier spacing (Δf); NR NodeB (gNB); Aperiodic (AP); Beam Failure Recovery (BFR); Beam Failure Detection-Reference Signal (BFD-RS); Block Error Rate (BLER);Bandwidth Part (BWP); Carrier Aggregation (CA); Contention-Based (e.g. access, channel, resource) (CB); Clear Channel Assessment (CCA); Code Division Multiplexing (CDM); Cell Group (CG); Cross Link Interference (CLI); Coordinated Multi-Point transmission/reception (CoMP); Channel Occupancy Time (COT); Cyclic Prefix (CP); Common Phase Error (CPE); Conventional OFDM (relying on cyclic prefix) (CP-OFDM); Channel Quality Indicator (CQI); Core Network (e.g. LTE packet core or NR core) (CN); Cyclic Redundancy Check (CRC); Channel State Information (CSI); Channel State Information-Reference Signal (CSI-RS); Central Unit (CU); Device to Device transmissions (e.g. LTE Sidelink) (D2D); Dual Connectivity (DC); Downlink Control Information (DCI); Downlink (DL); Demodulation Reference Signal (DM-RS); Data Radio Bearer (DRB); Distributed Unit (DU); E-UTRA - NR Dual Connectivity (EN-DC); Evolved Packet Core (EPC); Frequency Domain-Code Division Multiplexing (FD-CDM); Frequency Division Duplexing (FDD); Frequency Division Multiplexing (FDM); Hybrid Automatic Repeat Request Negative Acknowledgements (HARQ NACKs); Inter-Cell Interference (ICI); Inter-Cell Interference Cancellation (ICIC); Internet Protocol (IP); Listen-Before-Talk (LBT); Logical Channel (LCH); Logical Channel Identity (LCID); Logical Channel Prioritization (LCP); Low Latency Communications (LLC); Long Term Evolution (e.g., from 3GPP LTE R8 and up) (LTE); Medium Access Control (MAC); Medium Access Control Control Element (MAC CE); Negative (ACK NACK); Multimedia Broadcast Multicast System (MBMS); Master Cell Group (MCG); Modulation and Coding Scheme (MCS); Multiple Input Multiple Output (MIMO); Machine-Type Communications (MTC); Multi-RAT Dual Connectivity (MR-DC); Non-Access Stratum (NAS); New candidate beam-Reference Signal (NCB-RS); NR-RAN - E-UTRA Dual Connectivity (NE-DC); New Radio (NR); New Radio Dual Connectivity (NR-DC); Orthogonal Frequency-Division Multiplexing (OFDM); Out-Of-Band (emissions) (OOB); Total available WTRU power in a given transmission interval (Pcmax); Primary cell of Master Cell Group (Pcell); Primary Cell Group (PCG); Protocol Data Unit (PDU); Packet Error Rate (PER); Physical Layer (PHY); Public Land Mobile Network (PLMN); Packet Loss Rate (PLR); Physical Random-Access Channel (PRACH); Physical Resource Block (PRB); Positioning Reference Signal (PRS); Primary cell of a Secondary cell group (Pscell); Primary Synchronization Signal (PSS); Phase Tracking-Reference Signal (PT-RS); Quality of Service (from the physical layer perspective) (QoS); Radio Access Bearer (RAB); Radio Access Network Paging Area (RAN PA); Random Access Channel (or procedure) (RACH); Random Access Response (RAR); Radio Access Technology (RAT); Resource Block (RB); Radio access network Central Unit (RCU); Radio Front end (RF); Resource Element (RE); Radio Link Failure (RLF); Radio Link Monitoring (RLM); Radio Network Identifier (RNTI); Random Access Occasion (RO);Read-Only Mode (for MBMS) (ROM); Radio Resource Control (RRC); Radio Resource Management (RRM); Reference Signal (RS); Round-Trip Time (RTT); Secondary Cell Group (SCG); Single Carrier Multiple Access (SCMA); Sub-Carrier Spacing (SCS); Service Data Unit (SDU); Spectrum Operation Mode (SOM); Semi-persistent (SP); Primary cell of a master or secondary cell group (SpCell); Signaling Radio Bearer (SRB); Synchronization Signal (SS); Sounding Reference Signal (SRS); Secondary Synchronization Signal (SSS); Supplementary UpLink (SUL); Switching Gap (in a self-contained subframe) (SWG); Transport Block (TB); Transport Block Size (TBS); Transmission Configuration Index (TCI);Time-Division Duplexing (TDD); Time-Division Multiplexing (TDM); Time Interval (in integer multiple of one or more symbols) (TI); Transmission Time Interval (in integer multiple of one or more symbols) (TTI); Transmission / Reception Point (TRP); Transmission / Reception Point Group (TRPG); Tracking Reference Signal (TRS); Transceiver (TRx); Uplink (UL); Ultra-Reliable Communications (URC); Ultra-Reliable and Low Latency Communications (URLLC); Vehicular communications (V2X); Wireless Local Area Networks and related technologies (IEEE 802.xx domain) (WLAN); and Cross Division Duplex (XDD).

In an embodiment, avoidance reporting after sensing (ARAS) may be performed. For example, a potential victim WTRU may receive measurement and/or reporting configuration for a list of reference sub-bands (e.g., Ref_SB). In an example, the WTRU may receive reference subbands (e.g., Ref_SB) via a subset of time-frequency resource mask, (for example, a set of sub-bands or a set of symbols/slots). In an example, the measurement/sensing configuration may include one or a combination of the reference signals, the RS time/frequency resources, and the like. The reference signals may include, for example, but not limited to zero power channel state information reference signal (ZP-CSI-RS), non-zero power channel state information reference signal (NZP-CSI-RS), SRS, and the like. The RS time/frequency resources may include, for example, subbands. In an example, the WTRU reporting configuration may include one or both of the CSI quantities and the time/frequency reporting resources. The CSI quantities may include, for example, but not limited to, CLI-RSSI, SRS-RSRP, and the like.

In an embodiment, the WTRU may receive a trigger for event-based interference sensing and/or measurement. The WTRU may receive the trigger for event-based interference sensing and/or measurement, such as, CLI). The WTRU may receive the trigger for event-based interference sensing and/or measurement for the active SB as well as one or more of the reference SBs (e.g., Ref_SB). In an example, the event for triggering the CLI sensing may be one or both of a WTRU request and/or a gNB indication. For example, the event for triggering the CLI sensing may correspond to the victim-WTRU determining one or more DL reception failures. For instance the victim-WTRU may determine the one or more DL reception failures for example, along with transmitting N NACKs. In some cases, the victim-WTRU may determine the one or more DL reception failures based on a counter being over a threshold. For instance the victim-WTRU may determine the one or more DL reception failures based on a counter being over a threshold within a time window (e.g., a timer). In an example, the event for triggering the CLI sensing may correspond to a need to avoid an SB and a need for the WTRU to communicate over another SB. For example, the WTRU may need to communication over another SB as a supplementary mechanism for XDD.

In one or more cases, the WTRU may receive a type of interference measurement. For example, the type of interference measurement may include, but is not limited to: an overlapping CLI, a partial overlapping CLI, and/or a non-overlapping CLI. An overlapping CLI may be, for example, an intra-subband CLI. A partial overlapping CLI may be, for example, a set of cells/TRPs with RBs partially overlapped between UL and DL an inter-subband CLI. A non-overlapping CLI may an inter-subband CLI.

In an example, the WTRU may measure CLI-RSSI and/or SRS-RSRP in a given short time period over configured frequency/subband resources. The measurement may be reported via an L1 signaling (e.g., L1-CLI-RSSI reported via PUCCH, PUSCH, RACH, SRS). For instance, the WTRU may report the measurement. The L1 signaling, such as, but not limited to L1-CLI-RSSI, may be reported via PUCCH, PUSCH, RACH, SRS, and the like. In an example, the WTRU may receive configuration for delta CLI-RSSI measurement. In some cases, WTRU may determine the delta CLI-RSSI. For instance, the WTRU may determine the delta CLI-RSSI based on the difference between a first CLI-RSSI (e.g., CLI-RSSI1) and a second CLI-RSSI (e.g., CLI-RSSI2). For example, delta-CLI-RSSI = CLI-RSSI1 - CL-RSSI2. In some cases, the first CLI-RSSI may be measured from resources located in the middle of the scheduled RBs. In some cases, the second CLI-RSSI may be measured from resources located in the edge of the scheduled RBs. In one or more cases, the WTRU may report delta CLI-RSSI based on the measures delta CLI-RSSI being larger than a threshold indicating a potential edge-RB's CLI. The potential edge-RB's CLI may be, for example, a non-overlapping CLI.

For the instances in which the WTRU senses/measures interference, the WTRU may report a CLI sensing/measurement. For example, the WTRU may report a CLI sensing measurement based on L1-CLI-RSSI and respective threshold. In one or more cases, the WTRU may send a flag in addition to the NACK transmission to indicate potential interference. For example, the flag may indicate that the NACK transmission may be based on sensing interference. For instance, the sensing interference may occur when L1-CLI-RSSI greater than or equal to respective threshold. In another example, the flag may indicate that the NACK transmission may be based on interference, such as CLI. Based on the interference, the WTRU may request an SR for interference measurement (e.g., L1-CLI-RSSI). In one or more cases, the WTRU may request to switch to another reference subband (e.g., from Ref_SB). For example, the WTRU requests to switch to another reference subband in which the WTRU may not have sensed the interference. For instance, the WTRU may request to switch to another reference subbband, such as, but not limited to, L1-CLI-RSSI that is lower than respective threshold.

Transmission yielding may be carried out after sensing. In some cases, a potential aggressor WTRU may determine a list of reference sub-bands (e.g., Ref_SB). The WTRU may switch to the list of reference sub-bands, for example, in case CLI may be caused for a potential victim WTRU in the active SB. For instance, the WTRU may receive a subset of a time-frequency resource mask, such as, but not limited to, a set of sub-bands or a set of symbols/slots. In some cases, the aggressor WTRU may perform event-based CLI/channel occupancy sensing in the active SB. For example, the aggressor WTRU performs event-based CLI/channel occupancy sensing in the active SB when a victim-WTRU determines one or more DL reception failures. The victim-WTRU may determine the one or more DL reception failures based on a counter being over a threshold. In some instances, the victim-WTRU determines the one or more DL reception failures, for example, along with transmitting a NACK. In some instances, the victim-WTRU determines the one or more reception failures based on the counter being over the threshold within a time window, such as, a timer. In some cases, the WTRU may determine that a potential victim WTRU is having a DL based on the aggressor WTRU detecting channel occupancy. In an example, the WTRU may report one or more of the sub-bands to switch to, suggesting UL SBs/BWP/CC where CLI may not be caused for the potential victim UE. In some cases, alternatively or in conjunction, the aggressor WTRU may receive an indication for preventing the aggressor WTRU to transmit in one or more configured granted resources. The aggressor WTRU may receive the indication for preventing the aggressor WTRU to transmit in one or more of the configured granted resources due to interference (e.g., grant cancellation). In an example, the aggressor WTRU may be prevented from transmitting in the granted resources in one or more of the upcoming slots/symbols, where the slot/symbol resources may be identified. In one or more cases, an aggressor WTRU and/or victim WTRU may receive group-common DCI. The group-common DCI may indicate, for example, but not limited to, mutual interference and/or measurement, reporting, and/or SB-wise avoidance.

CLI sensing/measurements may be based on directional SRS-RSRP. In one or more cases, a potential victim WTRU may measure SRS-RSRP from one or more potential aggressor WTRUs. The potential victim WTRU may measure SRS-RSRP from one or more potential aggressor WTRUs based on directional measurement. In an example, the WTRU may determine the spatial domain filter for receiving the SRS signals. The spatial domain filter may be, for example, the same spatial domain filter as the spatial domain filter that is used for receiving RS sets indicated by TCI-State for respective CORESETs that the WTRU uses for monitoring PDCCH. In an example, the WTRU may use at least one spatial domain filter to receive the SRS signals during measuring the SRS-RSRP. In one or more cases, the WTRU may report the directional CLI/channel sensing accordingly.

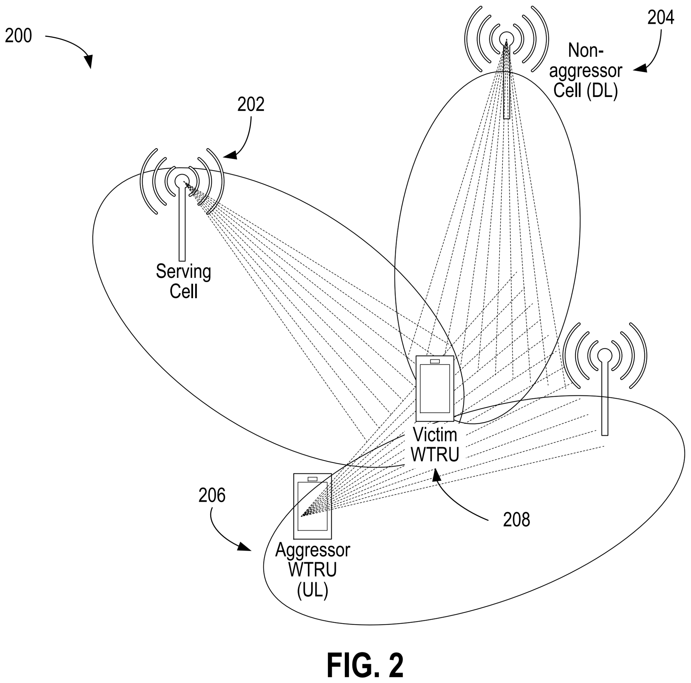

FIG. 2 is a diagram illustrating a system 200 that is experiencing an example of Cross Link Interference (CLI) directional sensing. The system 200 may include a serving cell 202, a non-aggressor cell (DL) 204, an aggressor WTRU (UL) 206, and a victim WTRU 208. The victim WTRU 208 may report the directional CLI/channel sensing according to FIG. 2.

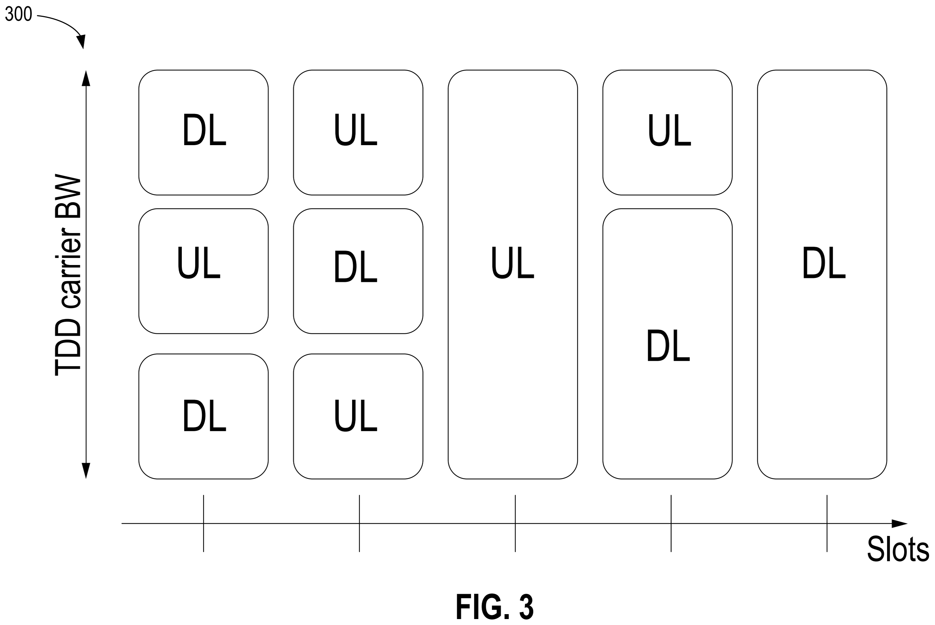

FIG. 3 is a diagram illustrating an example of Cross Division Duplex (XDD) 300. In an example, a RAN item on New Radio (NR) duplex operation may provide a foundation in improving conventional TDD operation by enhancing UL coverage, improving capacity, reducing latency, and so forth. The TDD may be based on splitting the time domain between the uplink and downlink. In an example, full duplex (e.g., cross division duplex (XDD)) that is a subband non-overlapping full duplex at the gNB side within a TDD band may be accomplished, as shown in FIG. 3.

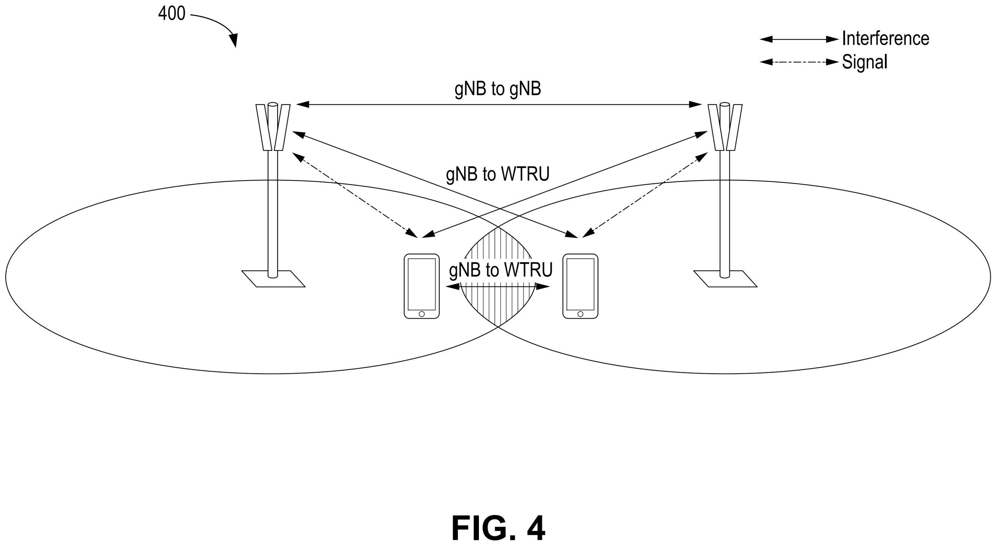

FIG. 4 is a diagram illustrating an example system 400 experiencing Cross Link Interference (CLI), inter-gNBs and inter-WTRUs. Accomplishing XDD may be subject to resolving challenges that may be raised due to cross-link interferences (CLI), as shown in FIG. 4. For example, in an XDD framework, a potential aggressor cell may switch the transmission mode in one or more subbands (SB) from UL to DL or vice-versa, which may, in an example, cause subband-wise CLI on potential victim gNBs and WTRUs. In an example, the CLI-RSSI measurement may be based on long-term measurements. In UL-to-DL CLI, the CLI from aggressor WTRUs may cause strong interference on the victim WTRUs in a specific SB while other SBs may not be impacted. The CLI in XDD may not be limited to WTRUs at the cell-edge. Rather, the WTRUs at the center and/or middle of the beam may experience CLI. As such, a WTRU may be configured to perform a SB-wise CLI measurement.

In some cases, the CLI may be caused by another WTRU. For the cases in which another WTRU causes the CLI, the CLI may be dependent on the direction of transmission beam. Moreover, the CLI may be dependent on sensing in all directions may result in misdetection of the CLI. Different WTRU behavior may result in case of subband-wise CLI in XDD based on the misdetection of the CLI. As such, a WTRU may be configured for channel sensing for the potential subband-wise CLI, CLI-avoidance by switching to other SBs, and directional CLI sensing in XDD as described herein.

In one or more cases in which CLI is sensed, a WTRU may be configured to determine and/or switch to a SB not affected by CLI as described herein. In one or more cases, an aggressor WTRU may be configured to account for the interference caused for the victim WTRUs. In one or more cases, a WTRU may be configured to discover the optimal means of measuring CLI in active SB and the potential SBs for switching. In one or more cases, subband-wise channel and/or interference sensing at the victim WTRU may be performed. In one or more cases, subbands avoidance reporting after sensing (ARAS) may be performed. In one or more cases, transmission yielding may be performed after sensing at the aggressor WTRU. In one or more cases, directional CLI sensing and measurement may be performed.

Herein, 'a' and 'an' and similar phrases are to be interpreted as 'one or more' and 'at least one'. Similarly, any term which ends with the suffix '(s)' is to be interpreted as 'one or more' and 'at least one'. The term 'may' is to be interpreted as 'may, for example'.

The WTRU may transmit or receive a physical channel or reference signal. In an example, the WTRU may transmit or receive the physical channel or reference signal according to at least one spatial domain filter. In one or more cases, the term "beam" may be used to refer to a spatial domain filter. In one or more cases, the WTRU may transmit a physical channel and/or signal using the same spatial domain filter as the spatial domain filter used for receiving an RS (e.g., CSI-RS) and/or a SS block. In one or more cases, a WTRU transmission may be referred to as "target". In one or more cases, the received RS and/or SS block may be referred to as "reference" and/or "source". In such cases, the WTRU may be configured to transmit the target physical channel and/or signal. In an example, the WTRU may be configured to transmit the target physical channel and/or signal according to a spatial relation with a reference to such RS and/or SS block. In one or more cases, the WTRU may transmit a first physical channel and/or signal . In an example, the WTRU may be configured to transmit the first physical channel and/or signal according to the same spatial domain filter as the spatial domain filter used for transmitting a second physical channel and/or signal. In an example, the first and/or second transmissions may be referred to as "target" and "reference" (and/or, for example, "source"), respectively. In such cases, the WTRU may transmit the first (e.g., target) physical channel and/or signal according to a spatial relation with a reference to the second (e.g., reference) physical channel and/or signal. In one or more cases, a spatial relation may be implicit. In one or more cases, the spatial relation may be configured by RRC. In one or more cases, the spatial relation may be signaled by MAC CE and/or DCI. For example, the WTRU may implicitly transmit a physical uplink shared channel (PUSCH) and/or a demodulation reference signal (DM-RS) of PUSCH according to the same spatial domain filter as an SRS that may be indicated by an SRI that may be indicated in DCI and/or configured by RRC. In another example, a spatial relation may be configured by RRC for an SRS resource indicator (SRI) and/or signaled by MAC CE for a PUCCH. The spatial relation may be referred to as a "beam indication".

The WTRU may receive a first (e.g., target) downlink channel and/or signal according to the same spatial domain filter and/or spatial reception parameter as a second (e.g., reference) downlink channel or signal. For example, such association may exist between a physical channel such as a physical downlink control channel (PDCCH) and/or a physical downlink shared channel (PDSCH) and/or its respective DM-RS. In an example, such association may exist when the WTRU may be configured with a quasi-colocation (QCL) assumption type D between corresponding antenna ports, for example, when the first and second signals are reference signals. In an example, such association may be configured as a TCI (transmission configuration indicator) state. In one or more cases, a WTRU may be indicated as an association between a CSI-RS and/or SS block and a DM-RS by an index to a set of TCI states that may be configured by RRC and/or signaled by MAC CE. Such indication may be referred to as a "beam indication".

A transmission and reception point (TRP) may be interchangeably used with one or more of transmission point (TP), reception point (RP), radio remote head (RRH), distributed antenna (DA), base station (BS), a sector (e.g., a sector of a BS), and/or a cell (e.g., a geographical cell area served by a BS). Multi-TRP may be interchangeably used with one or more of MTRP, M-TRP, and/or multiple TRPs.

The term "subband" and/or "sub-band" may be used to refer to a frequency-domain resource and/or may be characterized by one or more of the following: a set of resource blocks (RBs); a set of resource block sets (RB sets), for example, when a carrier has intra-cell guard bands; a set of interlaced resource blocks; a bandwidth part, and/or portion thereof; a carrier, and/or portion thereof; and the like. For example, a subband may be characterized by a starting RB and/or number of RBs for a set of contiguous RBs within a bandwidth part. In another example, a subband may be defined by the value of a frequency-domain resource allocation field and/or bandwidth part index.

The term "XDD" may be used to refer to a subband-wise duplex. In one or more cases, either UL or DL may be used per subband. XDD may be characterized by one or more of the following: Cross Division Duplex; subband-based full duplex; frequency-domain multiplexing (FDM) of DL/UL transmissions within a TDD spectrum; a subband non-overlapping full duplex; a full duplex other than a same-frequency full duplex; an advanced duplex method, for example, other than (e.g., pure) TDD or FDD, and the like. A Cross Division Duplex may be, for example, a subband-wise FDD within a TDD band. A subband-based full duplex may be, for example, a full duplex as both UL and DL may be used/mixed on a symbol/slot, in which either UL or DL may be used per subband on the symbol/slot. A full duplex other than a same-frequency, may include, for example, but not limited to, a spectrum sharing, subband-wise-overlapped, and the like.

The term "dynamic(/flexible) TDD" may be used to refer to a TDD system/cell. In an example, the TDD system/cell may dynamically (and/or flexibly) change, adjust, and/or switch a communication direction on a time instance. The TDD system/cell may dynamically (and/or flexibly) change, adjust, and/or switch a communication direction such as, but not limited to, one or more of a downlink direction, an uplink direction, a sidelink direction, and the like. The time instance may include for example, but not limited to, one or more of a slot, symbol, subframe, and the like. In an example, in a system employing dynamic and/or flexible TDD, a component carrier (CC) or a bandwidth part (BWP) may have one single type among 'D', 'U', and 'F' on a symbol and/or slot, which may be based on an indication by a group-common (GC)-DCI (for example, format 2_0) comprising a slot format indicator (SFI), and/or based on tdd-UL-DL-config-common and/or dedicated configurations. In an example, in a given time instance, slot, and/or symbol, a first gNB (e.g., cell, TRP, and the like) employing dynamic and/or flexible TDD may transmit a downlink signal to a first WTRU being communicated and/or associated with the first gNB, which may be based on a first SFI and/or tdd-UL-DL-config configured and/or indicated by the first gNB, and/or a second gNB (e.g, cell, TRP, and the like) that may employ dynamic and/or flexible TDD, which may receive an uplink signal transmitted from a second WTRU. In an example, the second WTRU may be communicated and/or associated with the second gNB which may be based on a second SFI and/or tdd-UL-DL-config that may be configured and/or indicated by the second gNB. In an example, the first WTRU may determine that the reception of the downlink signal is being interfered by the uplink signal. In an example, the interference, which may be caused by the uplink signal, may refer to a WTRU-to-WTRU cross-link interference (CLI).

The WTRU may report a subset of channel state information (CSI) components. In an example, the CSI components may correspond to one or more of: a CSI-RS resource indicator (CRI); a SSB resource indicator (SSBRI); an indication of a panel used for reception at the WTRU (e.g., a panel identity or group identity); measurements such as L1-RSRP, L1-SINR taken from SSB or CSI-RS (e.g., cri-RSRP, cri-SINR, ssb-Index-RSRP, ssb-Index-SINR); other channel state information; and the like. Other channel state information may include, for example, one or more of a rank indicator (RI); channel quality indicator (CQI); precoding matrix indicator (PMI); Layer Index (LI); and the like.

The WTRU may be configured to perform LBT channel sensing. In an example, in an operation with shared spectrum channel access, the WTRU may trigger an LBT failure indication. For instance, the WTRU may trigger the LBT failure indication based on the measured received signal strength indicator (RSSI) in the active BPW being higher than a threshold. In an example, the WTRU may measure RSSI. For instance, the WTRU may measure RSSI based on RSSI measurement timing configuration (RMTC), for example, in accordance with the configured parameters. In one or more cases, the WTRU may be configured with one or more of the following parameters: RMTC periodicity, RMTC Subframe offset, frequency resources for RSSI measurement, a number of measuring symbols, and a reference subcarrier spacing (SCS) and cyclic prefix (CP). In an example, RMTC periodicity may be *rmtc-Periodicity,.* In an example, RMTC Subframe offset may be *rmtc-SubframeOffset.* For example, the first symbol of each RMTC occasion may occur at a first symbol of an SFN and/or subframe of the NR. The subframe of the NR, in an example, may be based on the configured subframe offset. In an example, frequency resources for RSSI measurement may be *rmtc-Frequency.* In an example, a number of measuring symbols may be *measDurationSymbols.* The number of measuring symbols may indicate the number of consecutive symbols for the RSSO measurement. In an example, reference subcarrier spacing (SCS) and cyclic prefix (CP) may be used for RSSI measurement (e.g., *ref-SCS-CP).*

The WTRU may be configured with one or more parameters to detect consistent LBT failure. For example, the WTRU may be configured to detect consistent LBT failure, such as, *Ibt FailureRecoveryConfig.* In one or more cases, the WTRU may configured with one or more of the following parameters: an LBT counter, an LBT timer, and a maximum count for the LBT failure indication. The LBT counter may be, for example, *LBT_COUNTER.* In one or more cases, the LBT counter may be a counter for consistent uplink LBT failure detection. In an example, the LBT counter may be incremented by 1 with each LBT failure indication. The LBT Timer may be, for example, *lbt-FailureDetectionTimer.* In one or more cases, the LBT Timer may be a timer for consistent uplink LBT failure detection. In an example, the LBT Timer may be started and/or restarted with an LBT failure indication. In one or more cases, a maximum value (i.e., a maximum count) for the LBT failure indication may be, for example, *lbt-FailurelnstanceMaxCount.* In an example, the maximum counter may determine the maximum number of times that an LBT failure indication may be expected to occur. For instance, the maximum counter may determine the maximum number of times that an LBT failure indication may be expected to occur for example, before WTRU triggers the LBT failure recovery detection.

In some examples, upon triggering and/or receiving an LBT failure indication in the active BWP in the serving cell, the WTRU may initiate and/or start an LBT detection timer (e.g, *lbt-FailureDetectionTimer)* and/or increment the LBT counter (e.g., *LBT_COUNTER)* by one. In one or more cases, the WTRU may compare the LBT counter. In an example, for the cases in which the LBT counter is equal to or greater than the maximum count for LBT failure detection (e.g., *Ibt-FailurelnstanceMaxCount),* the WTRU may trigger consistent LBT failure for the active BWP in the serving cell. In some cases, consistent LBT failure for the active BWP in the serving cell may be triggered. In an example, the WTRU may determine whether or not the consistent LBT failure may be triggered for one or more BWPs. In some cases, the one or more BWPs may be configured on the same carrier in the serving cell. For the cases consistent LBT failure for the active BWP in the serving cell is triggered, the WTRU may determine if the consistent LBT failure is triggered for all BWPs configured on the same carrier in the serving cell. In one or more cases, consistent LBT failure may be triggered for one, more, or all BWPs configured on the same carrier in the serving cell. In an example, the WTRU may indicate consistent LBT failure to upper layers. For the cases in which consistent LBT failure is triggered for all BWPs configured on the same carrier in the serving cell, the WTRU may indicate consistent LBT failure to upper layers. In one or more cases, consistent LBT failure may not be triggered for one, more, or all BWPs configured on the same carrier in the serving cell. The WTRU may switch the active BWP to a BWP on the same carrier in the serving cell, for which consistent LBT failure may be not triggered. In an example, for the cases in which consistent LBT failure is not triggered for all BWPs configured on the same carrier in the serving cell, the WTRU may switch the active BWP to a BWP on the same carrier in the serving cell, for which consistent LBT failure is not triggered.

The WTRU may receive a synchronization signal/physical broadcast channel (SS/PBCH) block. In an example, the SS/PBCH block (SSB) may include one or more of a primary synchronization signal (PSS), secondary synchronization signal (SSS), and physical broadcast channel (PBCH). In an example, the WTRU may monitor, receive, and/or attempt to decode one or more of an SSB during initial access, initial synchronization, radio link monitoring (RLM), cell search, cell switching, and other like scenarios.

The WTRU may measure and/or report the channel state information (CSI). In an example, the CSI for each connection mode may include and/or be configured with one or more of: CSI Report Configuration; CSI-RS Resource Set; and NZP-CSI-RS Resources. In an example, the CSI Report Configuration may include one or more of the following: CSI report quantity, CSI report type, CSI report codebook configuration, and CSI report frequency. The CSI report quantity may include, for example, a Channel Quality Indicator (CQI), a Rank Indicator (RI), a Precoding Matrix Indicator (PMI), a CSI-RS Resource Indicator (CRI), a Layer Indicator (LI), and the like. The CSI report type may include, for example, aperiodic, semi persistent, periodic, and the like. The CSI report codebook configuration may include, for example, Type I, Type II, Type II port selection, and the like. In an example, CSI-RS Resource Set may include one or more CSI Resource settings. The CSI Resource settings may include, for example, but not limited to: NZP-CSI-RS Resource for channel measurement; NZP-CSI-RS Resource for interference measurement; and CSI-IM Resource for interference measurement. The NZP CSI-RS Resources may include, for example, but not limited to, one or more of the following: a NZP-CSI-RS Resource ID; periodicity and offset; a QCL Info and/or TCI-state; and resource mapping (e.g., a number of ports, density, CDM type, and the like).

The WTRU may indicate, determine, and/or be configured with one or more reference signals. In an example, the WTRU may monitor, receive, and/or measure one or more parameters, for example, based on the respective reference signals. For example, the parameters may include one or more of the following: SS-RSRP; CSI-RSRP; SS-SINR; CSI-SINR; RSSI; CLI-RSSI; and SRS-RSRP. It is noted that the parameters monitored, received, and/or measured by the WTRU (e.g., SS-RSRP; CSI-RSRP; SS-SINR; CSI-SINR; RSSI; CLI-RSSI; and/or SRS-RSRP) are non-limiting examples of the parameters that may be included in reference signal(s) measurements. In an example, one or more of these parameters may be included in the reference signal(s) measurements. In another example, other parameters may be included in the reference signal(s) measurements.

An SS reference signal received power (SS-RSRP) may be measured based on the synchronization signals. The synchronization signals may be, for example, a demodulation reference signal (DMRS) in PBCH or SSS. In an example, SS-RSRP may be defined as the linear average over the power contribution of the resource elements (RE) that may carry the respective synchronization signal. In measuring the RSRP, power scaling for the reference signals may be required. For the cases in which SS-RSRP is used for L1-RSRP, the WTRU may perform the measurement based on CSI reference signals, for example, in addition to the synchronization signals. In one or more cases, CSI-RSRP may be measured based on the linear average over the power contribution of the RE that carry the respective CSI-RS. In an example, CSI-RSRP measurement may be configured within measurement resources for the configured CSI-RS occasions. In one or more cases, SS signal-to-noise and interference ration (SS-SINR) may be measured based on the synchronization signals. The synchronization signals may be, for example, DMRS in PBCH and/or SSS. SS-SINR may be the linear average over the power contribution of the RE that may, for example, carry the respective synchronization signal divided by the linear average of the noise and/or interference power contribution. The noise and/or interference power measurement may be accomplished based on resources that may be configured by higher layers, for example, in cases in which SS-SINR is used for L1-SINR. In one or more cases, CSI-SINR may be measured based on the linear average over the power contribution of the RE that may carry the respective CSI-RS divided by the linear average of the noise and/or interference power contribution. The noise and interference power measurement may be accomplished based on resources configured by higher layers, for example, in cases in which CSI-SINR is used for L1-SINR. Alternatively or in conjunction, the noise and/or interference power may be measured based on the resources that may carry the respective CSI-RS. In one or more cases, the received signal strength indicator (RSSI) may be measured based on the average of the total power contribution in configured OFDM symbols and bandwidth. In an example, the power contribution may be received from different resources. The different resources may include, for example, but not limited to co-channel serving and non-serving cells, adjacent channel interference, thermal noise, and the like. In one or more cases, a cross-link interference received signal strength indicator (CLI-RSSI) may be measured based on the average of the total power contribution, for example, in configured OFDM symbols of the configured time and/or frequency resources. In an example, the power contribution may be received from different resources. The different resources may include, for example, cross-link interference, co-channel serving and non-serving cells, adjacent channel interference, thermal noise, and the like. In one or more cases, sounding reference signals RSRP (SRS-RSRP) may be measured based on the linear average over the power contribution of the RE that carry the respective SRS.

A property of a grant and/or assignment may include one or more of the following: a frequency allocation; an aspect of time allocation (e.g., a duration); a priority; a modulation and/or coding scheme; a transport block size; a number of spatial layers; a number of transport blocks; a TCI state, CRI and/or SRI; a number of repetitions; a determination of whether the repetition scheme is Type A and/or Type B; a determination of whether the grant is a configured grant type 1, type 2 and/or a dynamic grant; a determination of whether the assignment is a dynamic assignment and/or a semi-persistent scheduling (e.g., configured) assignment; a configured grant index and/or a semi-persistent assignment index; a periodicity of a configured grant and/or assignment; a channel access priority class (CAPC); and any parameter provided in a DCI, for example, by MAC and/or by RRC for the scheduling the grant and/or assignment.

An indication by DCI may include one or more of the following: an explicit indication by a DCI field and/or by RNTI, and an implicit indication by a property. In an example, the explicit indication by a DCI field and/or by RNTI, which may be used to mask CRC of the PDCCH. In an example, the implicit indication by a property may be, for example, a DCI format, DCI size, Coreset and/or search space, Aggregation Level, first resource element of the received DCI (e.g., an index of first Control Channel Element). In an example, the mapping between the property and/or the value may be signaled by RRC and/or MAC.

In one or more cases, RS may be interchangeably used with one or more of a RS resource, RS resource set, RS port and/or RS port group, and be consistent with the embodiments disclosed. In one or more cases, RS may be interchangeably used with one or more of SSB, CSI-RS, SRS, and/or DM-RS, and be consistent with the embodiments disclosed. In one or more cases, interference may be interchangeably used with CLI, CLI-RSSI, and/or SRS-RSRP, and be consistent with the embodiments disclosed.

In one or more cases, Avoidance Reporting After Sensing (ARAS) may be performed. In an example, a WTRU may receive, (e.g., from a gNB), one or more configuration parameters for CSI/beam reporting. The one or more configuration parameters may include, for example, but not limited to, one or more DL RS (e.g., CSI-RS) resources. The one or more DL RS resources may be for DL measurement to, for example, derive and/or determine a CSI (and/or beam index and/or beam quality metric), which may be reported in a time instance for the CSI/beam reporting. In an example, the WTRU may receive a beam/TCI indication and/or configuration (e.g., from the gNB). The beam/TCI indication and/or configuration may be used for reception of a DL signal. In an example, the beam/TCI indication and/or configuration may be determined by the gNB based on the CSI/beam reporting from the WTRU. In an example, the WTRU may receive a grant (e.g., a DCI including a DL assignment) scheduling the reception of the DL signal. The WTRU may receive the DL signal using a spatial filter, which may, for example, be determined based on the beam/TCI indication.

In one or more cases, an interference, which may be based on a signal transmitted by a second WTRU (e.g., a nearby WTRU from the WTRU), may be present and affect to (e.g., degrade and/or reduce) a reception performance of the DL signal at the WTRU. In one or more cases, the presence of the interference may not be known prior to the grant. For example, the presence of the interference may not be known prior to the grant in a case in which the second WTRU may be associated with a different serving-cell/TRP from the WTRU. In an example, the WTRU may fail to receive the DL signal based on the interference. Interference may be, for example, WTRU-to-WTRU CLI based on the second UL signal of the WTRU. In some cases, interference may not be captured in the CSI/beam reporting. For example, interference may not be captured in the CSI/beam reporting as one or more DL RS resources may be reflect (e.g., relate to) the UL signal transmission of the second WTRU. The DL signal may, for example, degrade the DL performance in communication between the gNB and the WTRU. In one or more cases, the failure in receiving the DL signal may continue to occur. For example, the WTRU may fail to receive the DL signal for the cases in which the DL signal is re-transmitted by the gNB. For the cases in which unexpected WTRU-to-WTRU CLIs may exist for a duration of time, the WTRU may fail to receive the DL signal.

The WTRU (e.g., a potential victim WTRU) may determine a list of reference sub-bands (e.g., Ref_SB) that the WTRU may use or switch to the reference sub-band. In one or more cases, the WTRU may be indicated and/or configured with the list of reference sub-bands. For example, the WTRU may be indicated to switch to a sub-band, be indicated to use a sub-band for communication between the WTRU and the gNB, and/or be indicated to use a sub-band to check a CLI). The WTRU may check for a CLI by, for example, measuring, estimating, and/or determining the CLI. In one or more cases, the WTRU may receive the list of reference sub-bands as a subset of a time-frequency resource mask (e.g., a set of sub-bands and/or a set of symbols/slots, and/or the like). The WTRU may receive configuration for CLI sensing and/or measurement on the Ref_SBs.

The WTRU may receive a trigger for CLI sensing and/or a measurement on the Ref_SBs. In an example, the WTRU may explicitly receive the trigger and/or the measurement. The measurement may, for example, include aperiodic channel sensing. In one or more cases, the trigger may be based on an active (for example, current, currently being communicated with the gNB/TRP, and/or the like) SB and/or one or more reference SBs (e.g., Ref_SB). An active SB may be, for example, but not limited to, a current SB, an SB that is currently being communicated with the gNB/TRP , and the like. In one or more cases, the WTRU may determine that at least one event and/or condition (e.g., an event and/or condition corresponding to CLI sensing and/or measurement) may be met. In an example, the WTRU may start (e.g., conduct, begin, do, perform, and/or the like) CLI sensing and/or measurement based on determining that the at least one event and/or condition may be met. In some cases, the WTRU may start the CLI sensing and/or measurement based on, for example, at least one reference SB (e.g., Ref_SB) and/or at least one indicated, pre-configured, and/or pre-determined resource.

The WTRU may transmit (e.g., report) at least SB-related information content. The SB-related information content may include, for example, but not limited to, one or more SB indexes, corresponding SB-wise metric(s), and the like. SB-wise metric(s) may include, for example, but not limited to, SB-wise CLI-RSSI(s), SB-wise quality metric(s), and the like. In one or more cases, the WTRU may transmit at least the SB-related information content based on the CLI sensing and/or measurement being performed and/or conducted. For example, the WTRU may transmit at least the SB-related information content after the CLI sensing and/or measurement is performed and/or conducted. As such, the gNB may utilize the reported SB-related information content to avoid certain RB(s) and communicate with the WTRU. This may be an example of an Avoidance Reporting After Sensing (ARAS) mechanism that may be applied at the WTRU (e.g., based on a configuration of ARAS that may be received at the WTRU).

The at least one event/condition to start CLI sensing/measurement may include one or more of the following examples. For example, CLI sensing/measurement may start when the WTRU (e.g., a victim-WTRU) determines one or more (e.g., K) DL data (e.g., PDSCH) reception failures. In some cases, K may be a counter parameter indicated and/or pre-configured by the gNB. For example, for the cases in which K = 1, the at least one event/condition may be met when the WTRU fails to receive a scheduled PDSCH. In another example, for the cases in which K = 2 or K>2, the at least one event/condition may be met when the WTRU determines two (or K) occasions of PDSCH reception failures within, for example, a time window. In some cases, a parameter/value for the time window may be configured/indicated from the gNB.

In another example, CLI sensing/measurement may start when the WTRU (e.g., a victim-WTRU) determines one or more (e.g., K) DL data (e.g., PDSCH) reception failures and/or when the WTRU transmits one or more NACKs in response to at least one failure in receiving the one or more (e.g., scheduled) PDSCHs. For example, for the cases in which K = 1, the at least one event/condition may be met when the WTRU fails to receive a scheduled PDSCH and/or when the WTRU transmits a NACK based on determining a failure in receiving a PDSCH (e.g., a scheduled PDSCH). A NACK may be, for example, but not limited to, a Negative ACK, a Negative acknowledgement, and the like. In another example, for the cases in which K = 2 or K>2, the at least one event/condition may be met when the WTRU determines two (or K) occasions of PDSCH reception failures within, for example, a time window, and/or when the WTRU transmits two (or K) NACKs based on at least two (or K) failures being determined in receiving the two (or K) scheduled PDSCHs within, for example, the time window. The parameter/value for the time window may be configured/indicated from the gNB.

In another example, CLI sensing/measurement may start when an explicit indication that a SB needs to be avoided is received. For instance, the explicit indication that a SB is to be avoided may include an indication to the WTRU to communicate over other SB(s)). In another example, CLI sensing/measurement may start when an implicit indication that a SB needs to be avoided is identified (and/or for example, received, and/or determined). For instance, the implicit indication may indicate to the WTRU to communicate over other SB(s). The implicit indication may be a pre-defined and/or pre-configured rule based on one or more of a measurement, a reception, a detection of a DL signal, and the like.

The WTRU may receive (e.g., explicitly or implicitly) a trigger for measuring one or more types of interference (e.g., CLI) measurements. The WTRU may receive an indication and/or configuration of one or more of the following types of interference measurements: an overlapping CLI; a partial overlapping CLI; and a non-overlapping CLI. Overlapping CLI may be, for example, but not limited to, an intra-subband CLI. In an example, overlapping CLI may correspond to CLI over a set of RBs that are overlapped between DL reception (region) and UL transmission (region). For example, overlapping CLI may be over the set of RBs that overlapped between a DL reception and a UL transmission, for example, in a cell/TRP or in a set of cells/TRPs. The set of cells/TRPs may be, for example, a set of geographically distributed cells/TRPs.

Partial overlapping CLI may be a CLI over a set of RBs which are partially overlapped between a DL reception (region) and a UL transmission (region). For example, partial overlapping CLI may be the CLI over the set of RBs which are partially overlapped between the DL reception and the UL transmission, for example, in a cell/TRP or in a set of cells/TRPs. The set of cells/TRPs may be, for example, a set of geographically distributed cells/TRPs. A partial overlapping CLI may be a CLI over a set of RBs where the first set of RBs and the second set of RBs may be partially overlapped. For example, the partial overlapping CLI may be a CLI (i.e., occurred) between a first set of RBs for DL reception (region) and a second set of RBs for UL transmission (region), for example, in a cell/TRP or in a set of cells/TRPs, in which the first set of RBs and the second set of RBs may be partially overlapped. The set of cells/TRPs may be, for example, in a set of geographically distributed cells/TRPs.

Non-overlapping CLI may be, for example, but not limited to, an inter-subband CLI. The non-overlapping CLI may be a CLI (i.e., occurred) between a first set of RBs for DL reception (region) and a second set of RBs for UL transmission (region), in which the first set of RBs and the second set of RBs are not overlapped. The first set of RBs and the second set of RBs are not overlapped, for example, when M(>=0) RB gap between the DL reception region and the UL transmission region. The non-overlapping CLI may be a CLI between the first set of RBs for DL reception and the second set of RBs for the UL transmission in a cell/TRP or in a set of cells/TRPs. In an example, the set of cells/TRPs may be, for example, a set of geographically distributed cells/TRPs. The non-overlapping CLI may be where the first set of RBs and the second set of RBs are not overlapped (for example, there may be a M(>=0) RB gap between the DL reception region and the UL transmission region).

The WTRU may be configured, determined, and/or indicated to perform a measurement of CLI Received Signal Strength Indicator (RSSI) in a given time period. The given time period may, for example, but not limited to, include one or more slots, OFDM symbols, resource blocks (RBs), and/or resource elements (REs). In an example, the CLI-RSSI may be measured in a given time/frequency resource. The CLI-RSSI may be referred to as L1-CLI-RSSI, short-term CLI-RSSI, aperiodic CLI-RSSI, and the like. It is noted that CLI-RSSI, L1-CLI-RSSI, and/or RSSI may be interchangeably used in describing the embodiments disclosed herein.

In one or more cases, one or more RSSI types may be used. In one or more cases, the WTRU may be configured to perform one or more RSSI types. In an example, a first RSSI type may be based on a measurement over a long time period (e.g., more than one slot). The measurement may be reported via a higher layer signaling (e.g., RRC and/or MAC). In another example, a second RSSI type may be based on a measurement over a short time period (e.g., one slot, within a slot, one or more OFDM symbols within a slot, and the like). The measurement may be reported via L1 signaling, such as, but not limited to, PUCCH, PUSCH, RACH, SRS, and the like. It is noted that RSSI may be interchangeably used with RSRP, RSRQ, and/or SINR. In one or more cases, the WTRU may be configured with a set of time/frequency resources. The WTRU may use the set of time/frequency resources to measure L1-CLI-RSSI. In an example, the time/frequency resources for L1-CLI-RSSI measurement may be referred to as a CLI-RSSI Measurement Resource (CRMR).

In one or more cases, CRMR may be a resource configured, determined, and/or defined with one or more of following properties: a set of muted REs in downlink resource; a set of REs not scheduled or used for the WTRU measuring CRMR; a set of REs located in an RB which may be configured, or determined as a guard band or guard RB); one or more reference signals; a second set of DMRS REs within a second CDM group; and/or located within a scheduled resource. The one or more reference signals may be, for example, but not limited to, DMRS, SRS, sidelink CSI-RS, and the like. The CRMR resource located within the schedule resource may be, for example, scheduled PDSCH RBs.

In an example, the set of muted REs in downlink resource (e.g., PDSCH) may be rate-matched around and/or punctured for downlink reception and/or uplink transmission. In one example, the set of muted REs may have a same pattern (e.g., same time/frequency location) in each RB. In another example, the set of muted REs may have a different pattern based on the RB location. For example, a first pattern may be used for the RBs located in an edge of the scheduled RBs and a second pattern may be used for the RBs located in a center of the scheduled RBs. The first pattern and the second pattern may, for example, have a different number of muted RES. In another example, the muted Res may be in a form of zero-power CSI-RS (e.g., ZP-CSI-RS).

In an example, the set of REs located in an RB may be configured and/or determined as a guard band or a guard RB. In one example, the guard band or guard RB may be located between uplink resources and downlink resources. In an example, the WTRU may skip receiving and/or transmitting a signal in guard band.

The second set of DMRS REs within a second CDM group may be, for example, within a scheduled downlink resource/RBs, for example, of PDSCH. The second set of DMRS REs within a second CDM group may correspond to cases in which the WTRU may receive a DCI, scheduling the PDSCH, which may indicate a first set of DMRS REs corresponding to a first CDM group. The first CDM group may be used for receiving the PDSCH. In an example, the WTRU may receive the DCI, scheduling the PDSCH, indicating a first set of DMRS REs corresponding to a first CDM group. The WTRU may receive the DCI, scheduling the PDSCH, indicating the first set of DMRS REs corresponding to the first CDM group, for example, based on an indicated antenna port (e.g., a DMRS antenna port) field of the DCI. The WTRU may determine that a second set of DMRS REs within a second CDM group may be used as the CRMR, based on receiving the DCI. In one or more cases, the second CDM group may be a group other than the first CDM group. In one or more cases, the WTRU may determine that the second set of DMRS REs within the second CDM group may be used as the CRMR, for example, within the scheduled PDSCH.

In one or more cases, CRMR may be configured commonly for a set of WTRUs (e.g., WTRUs in proximity). For example, a gNB may configure a CRMR for a group of WTRUs. The group of WTRUs may share one or more of following: a group-ID to receive a DCI; a zone-ID; and/or WTRUs paired for sidelink unicast (and/or, for example, groupcast) transmission. The group-ID to receive the DCI may be, for example, a group-RNTI. The zone-ID may be determined based on a geographical location of the WTRU, such as, but not limited to, GNSS. In one or more cases, L1-CLI-RSSI measurement (e.g., including CRMR resource) may be considered as a CSI reporting quantity and/or configured as a part of CSI reporting setting.

The WTRU may be configured, determined, and/or indicated to perform a delta CLI-RSSI. The delta CLI-RSSI may, for example, be based on a first CLI-RSSI measurement in a first time/frequency location and a second CLI-RSSI measurement in a second time/frequency location. One or more of following may apply. In one or more cases, the delta CLI-RSSI (i.e., delta-CLI-RSSI) may be the difference between a first CLI-RSSI (i.e., CLI-RSSI₁) and a second CLI-RSSI (i.e., CLI-RSSI₂) For example, delta-CLI-RSSI = CLI-RSSI₁ - CL-RSSI₂. In another example, delta-CLI-RSSI = CLI-RSSI₂ - CL-RSSI₁. In one or more cases, the first CLI-RSSI may be measured from CRMR resources located in the edge of the scheduled RBs while the second CLI-RSSI may be measured from CRMR resources located in the middle of the scheduled RBs. As such, a radio resource overhead may be reduced, for example, in that the first CLI-RSSI and the second CLI-RSSI may not be configured on separated REs from the scheduled RBs. In an example, the first CLI-RSSI and the second CLI-RSSI may not be configured on separated REs from the scheduled RBs based on the delta CLI-RSSI being determined based on CLI-RSSI₁ - CL-RSSI₂ and may represent, capture, and/or reflect an amount of CLI. The delta CLI-RSSI may represent, capture, and/or reflect an amount of CLI as CLI-RSSI₁ may mainly represent and/or include a general downlink intra-cell/inter-cell interference and as CLI-RSSI₂ may represent and/or include (e.g., in addition to the general DL interference) a leakage interference of the CLI (e.g., inter-subband CLI) more than the CLI-RSSI₁. In an example, the CLI-RSSI₁ may mainly represent and/or include a general downlink intra-cell/inter-cell interference and the CLI-RSSI₂ may represent and/or include a leakage interference of the CLI more than the CLI-RSSI₁ when a UL transmission from an aggressor WTRU (e.g., an UL transmission causing the CLI) occurs on adjacent RBs (e.g., nearby RBs) of the scheduled RBs. In one or more cases, the WTRU may be configured with a first CRMR resource for the first CLI-RSSI measurement and a second CRMR resource for the second CLI-RSSI measurement. In one or more cases, the WTRU may determine to report CLI measurement related information when a measured delta-CLI-RSSI is larger than a threshold. For example, CLI reporting may be triggered based on a delta-CLI-RSSI measurement being larger than a threshold. In some cases, the threshold may be predetermined and/or configured.

The WTRU may be configured or determine to measure CLI-RSSI per subband level. For example, a subband may be configured and/or predetermined. In one or more cases, the WTRU may perform a CLI-RSSI measurement in each subband. One or more of following may apply. In one or more cases, a subband size may be determined based on the number of scheduled RBs (e.g., for PDSCH). For example, a first subband size (e.g., 4) may be used when the scheduled RB is larger than X (e.g., 12), and a second subband size (e.g., 2) may be used when the scheduled RB is smaller than or equal to X. In another example, the first subband size may be used when the scheduled RB is larger than X. In another example, the second subband size may be used when the scheduled RB is smaller than or equal to X. In one or more cases, the WTRU may report CLI-RSSI measurement for one, more, or all subbands. In one or more cases, the WTRU may report a subset of CLI-RSSI. The subset may be determined based on one or more conditions, such as, but not limited to, a CLI-RSSI value being above threshold, a subband location (e.g., an edge of scheduled RBs), a subband index, and the like.

In one or more cases, a bandwidth of beam measurement and/or reporting (e.g., wideband and/or subband) may be determined (e.g., by the WTRU) based on one or more conditions. The conditions may include, for example, but not limited to, a slot type, a presence of CLI-RSSI measurement, and the like. In an example, slot type may be XDD slot and/or non-XDD slot. For instance, the WTRU may report wideband CRI (e.g., wideband beam index) in non-XDD slot (e.g., no uplink and downlink resources (e.g., by a duplexing operation) in the same slot). In another instance, the WTRU may report subband CRI (e.g., subband beam index) in XDD slot (e.g., uplink and downlink resources are in the same slot, for example, based on a duplexing operation). With respect to the presence of CLI-RSSI measurement, the bandwidth of beam measurement and/or reporting may be determined based on whether or not CLI-RSSI is measured in the same slot.

The WTRU may be indicated to perform a CLI-RSSI measurement in a specific frequency location within scheduled RBs. In one or more cases, the WTRU may be indicated to perform a CLI-RSSI measurement in a specific frequency location within non-scheduled RBs. In one or more cases, the WTRU may be indicated to perform a CLI-RSSI measurement in a specific frequency location within scheduled RBs and non-scheduled RBs. The specific frequency location may correspond to one or more of subbands, RBs, and REs. In one or more cases, the indication may be in a DCI, which may trigger the CLI-RSSI measurement. The CLI-RSSI measurement may be, for example, aperiodic CLI-RSSI measurement. In one or more cases, the specific frequency location may be indicated based on the CRMR resource frequency location. For example, one or more CRMR resources may be configured and/or each CRMR resource may be located in a specific frequency location based on a configuration. The WTRU may be indicated to perform measurement on CRMR resource indicated in the DCI.

The WTRU may be configured, determined, or indicated to report channel and/or interference measurements. The WTRU may report the measured reference signal's strength and/or power (e.g., CLI-RSSI, SRS-RSRP, L1-CLI-RSSI) in the configured resources. In one or more cases, the WTRU may report the level of the measured reference signal's strength and/or power based on one or more of the configured and/or determined thresholds. In an example, the WTRU may report the potential existence of interference if the measured power and/or strength is higher than a configured and/or determined threshold. In another example, the WTRU may report the potential existence of a partial and/or subband-edge interference (e.g., CLI) if the difference between the measurements in one or more of the resources is higher than a configured and/or determined threshold. Alternatively, the WTRU may report and/or request one or more of the subbands to be reliable to switch to, for example, in case the measured interference power and/or strength is lower than a configured and/or determined threshold.

The WTRU may indicate (e.g., via transmitting, sending, reporting, etc.) at least one type of (e.g.,, CLI-related) information content discussed throughout this disclosure. For example, information contents may correspond to one or more of the level of the interference, the level of CLI, subband-wise CLI, a measurement result/metric based on measuring the CRMR, the delta-CLI-RSSI, and the like). The WTRU may indicate at least one type of information content via, for example, No-Acknowledgement (NACK) transmission. For example, the WTRU may indicate at least one type of information content along with a NACK transmission, in addition to a NACK transmission, associated with a NACK transmission, and/or based on a HARQ-ACK codebook including one or more (e.g., additional) bits to indicate the at least one type of the information contents, and the like). In one or more cases, the NACK transmission may be performed in response to a reception failure of a scheduled PDSCH. In an example, the WTRU may send a flag signal along with NACK transmission. For instance, the WTRU may send the flag signal along with the NACK transmission in response to a reception failure of a scheduled PDSCH. The flag signal along with the NACK transmission may indicate, for example, that the power and/or strength of the interference is measured, and the measured value of the power and/or strength is higher than a configured and/or determined threshold. For example, L1-CLI-RSSI being greater than or equal to respective threshold may indicate potential existence of interference. In another instance, the WTRU may send a flag signal along with NACK transmission, for example, in response to a reception failure of a scheduled PDSCH, to indicate that a NACK may be potentially caused by interference (e.g., CLI). For example, the WTRU may send the flag along with NACK to request a scheduling request (SR) for channel and/or interference measurements (e.g., L1-CLI-RSSI measurement). In one or more cases, the WTRU may be configured to measure and/or sense interference power/strength (e.g., CLI via L1-CLI-RSSI) in one or more reference subbands.

The WTRU may construct a list. The list may include, for example, but not limited to, the interference measurement results in one or more of the reference subbands. In some cases, the list may be ordered in an increasing order (e.g., Ref_SB_ordered). In one or more cases, the WTRU may determine and/or detect interference (e.g., L1-CLI-RSSI > threshold) in the active SB. The WTRU may send a request including one or more of the subbands that the WTRU prefers to switch to (e.g., communicate with the gNB on), for example, in case the WTRU determines and/or detects interference (e.g., L1-CLI-RSSI > threshold) in the active SB. The WTRU may select, determine, and/or identify one or more of the preferred subbands. The WTRU may select, determine, and/or identify one or more of the preferred subbands, for example, based on the measured interference power/strength. The measured interference power/strength may be the least (or, for example, less than a threshold) in the determined list (e.g., Ref_SB_ordered). As such, the WTRU may report and/or request to switch to the subbands, BWPs, and/or component carriers (CC) where, for example, the data transmission and/or reception may be accomplished reliably.

In one or more other cases, the WTRU may construct the list including the interference measurement results in one or more of the reference SBs, for example, after the WTRU has measured and/or sensed interference in the active SB. As such, the WTRU may report and/or request to switch to the subbands, BWPs, and/or component carriers (CC) where the data transmission and reception may be accomplished reliably (e.g., measured L1-CLI-RSSI < threshold). In one or more cases, the WTRU may determine that the measured interference power and/or strength (e.g., L1-CLI_RSSI) in one or more of the reference SBs is lower than the configured and/or determined threshold. In one or more cases, the WTRU may determine that the measured interference power and/or strength (e.g., L1-CLI_RSSI) in none of the reference SBs is lower than the configured and/or determined threshold. As such, the WTRU may send a report and/or request to measure one or more other BWP(s), a set of RBs, other deactivated CC(s), and the like. The WTRU may send the report and/or request to measure, for example, in order to conduct a preferred BWP(s)/CC(s)/SB(s) reporting. In some cases, the BWP(s) in the report and/or request to measure may be, for example, deactivated BWP(s).

Granted resources, subbands, RBs, and scheduled RBs, may be interchangeably used and be consistent with the embodiments disclosed here. In one or more cases, the WTRU may have multiple grant configurations. The WTRU may determine, identify, and/or be configured with one or more granted resources. In one or more cases, the WTRU may sense, measure, and/or determine the interference signals in one or more of the granted resources. The WTRU may dynamically select to use or avoid one or more granted resources. As such, the WTRU may use or avoid one or more of the granted resources and/or switch among granted resources accordingly. For example, the WTRU may use or avoid one or more of the granted resources and/or switch among granted resources accordingly based on the level of the interfering signals.

In one or more cases, a determination of the granted resources to be used and/or switched to may be used to perform one or more of the following operations: reception of channels and signals, transmission of channels and signals, and the like. For example, the WTRU may determine the granted resources to be used and/or switched to receive one or more channels and signals, such as, but not limited to one or more of PDCCH, PDSCH, CSI-RS, SSB (e.g., including PBCH), PRS, DM-RS, and the like). In another example, the WTRU may determine the granted resources to be used and/or switched to transmit one or more channels and signals, such as, but not limited to, one or more of PRACH, PUCCH, PUSCH, SRS, DM-RS, and the like.

The WTRU may be configured with a mode of operation with a dynamic granted resources determination and/or a semi-static granted resources determination. For example, the WTRU may use one or more modes of operation (e.g., a dynamic and/or semi-static determination) to determine to use, avoid, and/or switch to the granted resources. The number (e.g., the maximum number) of configured granted resources may be determined based on a mode of operation determined, used, and/or configured. In one or more cases, one or both of the following may apply: a mode of operation may be determined based on the number of granted resources for a dynamic operation; and a mode of operation may be determined based on the WTRU capability and/or gNB configuration, for example, based on the WTRU capability reporting. In an example, the WTRU may determine the mode of operation based on the number of configured and/or indicated granted resources for a dynamic operation. For instance, a gNB may indicate and/or configure one or more granted resources. In some cases, the WTRU may determine to use a semi-static determination mode. In other cases, the WTRU may determine to use a dynamic determination mode. For the cases in which the gNB indicates and/or configures one granted resource, the WTRU may determine to use semi-static determination mode. For the cases in which the gNB indicates and/or configures more than one granted resources, the WTRU may determine to use dynamic determination mode. In another example, the mode of operation may be determined based on a WTRU capability and/or gNB configuration based on a WTRU capability reporting. In one or more cases, the WTRU may indicate one or more granted resources as a WTRU capability. In one or more cases, the WTRU may determine to use a semi-static determination mode and/or a dynamic determination mode. For the cases in which the WTRU indicates one granted resource as a WTRU capability, the WTRU may determine to use semi-static determination mode. For the cases in which the WTRU indicates more than one granted resources as the WTRU capability, the WTRU may determine to use dynamic determination mode. In one or more cases, the gNB configuration may be performed based on the reported WTRU capability.

In one or more cases, the WTRU may request a preferred mode of operation for determination among granted resources. The WTRU may be capable of supporting one or both modes of operation. The WTRU may indicate to a gNB one or more preferred modes of operation. For the cases in which the WTRU is capable of supporting both modes of operation, the WTRU may indicate to the gNB for the preferred mode of operation. In one or more cases, the WTRU may determine the preferred mode of operation based on one or more of: interference strength; channel quality; and/or traffic.

The WTRU may determine one or more preferred modes of operation based on interference strength. For example, the WTRU may determine, identify, and/or be configured with resources to measure interference (e.g., CLI) in one or more of the granted resources. The determined, identified, and/or configured resources may be, for example, but not limited to NZP-CSI-RS for IMR, ZP-CSI-RS for IMR, SRS resources for SRS-RSRP, and the like. As such, the WTRU may determine to use dynamic determination mode if the measured interference strength and/or quality in one or more of the granted resources is higher than respective thresholds. In an example, the WTRU may dynamically report, request, and/or switch between the granted resources based on the interference strength.

The WTRU may determine the preferred mode of operation based on channel quality. For example, the WTRU may measure the channel quality for one or more of the granted resources. The WTRU may measure the channel quality such as, but not limited to, CQI, RSRP, SINR, pathloss, probability of blockage, and the like. In an example, the WTRU may determine to use dynamic determination mode for the cases in which the measured channel quality in one or more of the granted resources is lower than respective thresholds. As such, the WTRU may dynamically report, request, and/or switch between the granted resources based on the channel quality.

The WTRU may determine the preferred mode of operation based on traffic (e.g., an amount of data to be received and/or transmitted). The WTRU may determine the traffic (e.g., the amount of data to be received and/or transmitted). In an example, the WTRU may determine to use the dynamic determination mode for the cases in which the traffic is higher than respective thresholds. As such,, the WTRU may dynamically report, request, and/or switch between the granted resources based on the traffic.

In one or more cases, in first mode of operation (e.g., a semi-static determination), the WTRU may use an indicated and/or configured granted resource for transmission and/or reception of channels and/or signals and sensing, processing, measuring one or more channels and/or signals. In one or more cases, in first mode of operation (e.g., a semi-static determination), the WTRU may use the indicated and/or configured granted resource to transmit and/or receive channels and/or signals. In one or more cases, in first mode of operation (e.g., a semi-static determination), the WTRU may use an indicated and/or configured granted resource to sense, process, and/or measure one or more channels and/or signals. In one or more cases, in a second mode of operation (e.g., a dynamic determination), the WTRU may determine a granted resource out of one or more of the granted resources based on one or more of: gNB indication, WTRU request/report, or combination of gNB indication and a WTRU request/report.

In one or more cases, in a second mode of operation (e.g., dynamic determination), the WTRU may determine a granted resource out of one or more of the granted resources based on, for example, a gNB indication. In an example, the WTRU may receive an indication of the granted resources based on one or more of: an indication of a configured grant index; an indication of frequency and/or time resources; an indication of TCI state, CRI, and/or SRI; PDCCH transmission in a dedicated CORESET; and/or a gNB indication.

In one or more cases, the WTRU may receive the indication of the granted resources based on an indication of configured grant index. For example, the WTRU may be configured with a first granted resource and a second granted resource. In one or more cases, the WTRU may be configured with the first granted resource with a first grant index and the second granted resource with a second grant index.

In one or more cases, the WTRU may receive the indication of the granted resources based on an indication of frequency and/or time resources. For example, the WTRU may be configured with a first granted resource in configured time resources and a second granted resource. The first granted resource in configured time resources may be, for example\, located in the first set of subbands. The second granted resource may be located in the second set of subbands. The WTRU may receive an indication of frequency subbands/resources, based on the configuration. The WTRU may receive an indication of the set of subbands via, for example, one or more of a DCI, MAC CE, and RRC. For the cases in which the WTRU receives an indication of the set of subbands, the WTRU may determine the first granted resource. For the cases in which the WTRU receives an indication of the second set of subbands, the WTRU may determine the second granted resource.

In one or more cases, the WTRU may receive the indication of the granted resources based on an indication of TCI state, CRI, and/or SRI. For example, the WTRU may be configured with a first TCI state, CRI, and/or SRI and a second TCI state, CRI, and/or SRI. The first TCI state, CRI, and/or SRI may be, for example, associated with a first granted resource. The second TCI state, CRI, and/or SRI may be, for example, associated with a second granted resource. The WTRU may receive an indication of a TCI state, CRI, and/or SRI (e.g., the first TCI state, CRI, and/or SRI; or the second TCI state, CRI, and/or SRI) via, for example, one or more of a DCI, MAC CE, and RRC. For the cases in which the WTRU receives an indication of the first TCI state, CRI, and/or SRI, the WTRU may determine the first granted resource. For the cases in which the WTRU receives an indication of the second TCI state, CRI, and/or SRI, the WTRU may determine the second granted resource.

In one or more cases, the WTRU may receive the indication of the granted resources based on PDCCH transmission in a dedicated CORESET. For example, the WTRU may be configured with a first CORESET associated with a first granted resource and a second CORESET associated with a second granted resource. In another example, the WTRU may be configured with the first CORESET associated with the first granted resource. In another example, the WTRU may be configured with the second CORESET associated with the second granted resource. For the cases in which the WTRU receives a PDCCH via the first CORESET, the WTRU may determine the first granted resource. For the cases in which the WTRU receives a PDCCH via the second CORESET, the WTRU may determine the second granted resource.

In one or more cases, the WTRU may determine a granted resource out of one or more of the granted resources based on a gNB indication. The WTRU may determine the granted resource based on one or more of: a priority, a modulation and coding scheme, a transport block size, a number of spatial layers, a number of transport blocks, a number of repetitions and/or a repetition scheme (e.g., Type A or Type B), a configured grant type (e.g., type 1, type 2, or a dynamic grant), a channel access priority class (CAPC), and the like.

In one or more cases, the WTRU may use, receive, and/or be configured with one or more modes of operations for the granted resources. For example, one or more modes of operations may be determined based on using, switching, and/or avoiding one or more of the granted resources. The WTRU may receive an indication of the granted resources and/or respective modes of operation. In an example, the WTRU may determine to use and/or switch to the indicated granted resources in the first mode of operation. In another example, the WTRU may determine to avoid the indicated granted resources in the second mode of operation. For instance, the WTRU may determine to avoid the indicated granted resources via, for example, a grant cancellation.

In one or more cases, the use, avoidance, and/or prevention of one or more of the granted resources may be based on one or more of: a report from potential victim WTRUs, and/or a report from aggressor WTRUs. In an example, the WTRU may determine to use, avoid, and/or prevent one or more of the granted resources based on a report from potential victim WTRUs. In an example, one or more of the victim WTRUs may sense and/or measure channel or interference (e.g., CLI) quality in one or more of the granted resources. The one or more victim WTRUs may determine that the measured quantities are lower and/or higher than respective threshold, respectively. The one or more of the potential victim WTRUs may report and/or send, to the WTRU, a request to avoid granted resources with channel quality lower than threshold and/or an interference level higher than respective thresholds. The WTRU may determine to use, avoid, and/or prevent one or more of the granted resources based on a report from aggressor WTRUs. In an example, one or more of the aggressor WTRUs may sense and/or measure channel or interference (e.g., CLI) quality in one or more of the granted resources. The one or more aggressor WTRUs may compare the measurements with respective thresholds. The one or more potential aggressor WTRUs may determine that transmission and/or reception of channel and/or signals on the sensed granted resources may cause interference (e.g., CLI) on potential victim WTRUs. As such, the one or more of the potential aggressor WTRUs may report and/or send, to the WTRU, a request to avoid respective granted resources.

In one or more cases, in a second mode of operation (e.g., dynamic determination), the WTRU may determine the granted resource out of one or more of the granted resources based on a WTRU request. For example, the WTRU may request to use, avoid, and/or switch to a granted resource. The WTRU may determine to use and/or avoid one or more of the granted resources based on one or more of: the WTRU sensing and/or measuring the interference in one or more of the granted resources; a potential aggressor WTRU sensing and/or measuring the interference (CLI) in one or more of the granted resources; and a potential aggressor WTRU receiving a trigger to sense and/or measuring the channel and/or interference quality in one or more of the granted resources (e.g., based on one or more events).

The WTRU may determine to use and/or avoid one or more of the granted resources based on the WTRU sensing and/or measuring the interference in one or more of the granted resources. For example, the WTRU may use non-zero power CSI-RS (e.g., NZP-CSI-RS) and/or zero-power CSI-RS (e.g., ZP-CSI-RS) for interference measurement resources (IMR). In an example, the WTRU may sense and/or measure CLI based on CLI-RSSI and/or SRS-RSRP. In another example, alternatively or in conjunction, the WTRU may measure CLI based on L1-CLI-RSSI. For the cases in which the measured interference (e.g., CLI) is higher than respective thresholds in one or more of the granted resources, the WTRU may request to use and/or switch to another set of one or more granted resources. The WTRU may request to use and/or switch to another set of one or more granted resources, in which the measured interference (e.g., CLI) is lower than respective thresholds.

The WTRU may determine to use and/or avoid one or more of the granted resources based on a potential aggressor WTRU sensing and/or measuring the interference (e.g., CLI). The potential aggressor WTRU may sense and/or measure the interference in one or more of the granted resources. For instance, the potential aggressor WTRU may use NZP-CSI-RS and/or ZP-CSI-RS for IMR. In another example, the WTRU may sense and/or measure CLI based on CLI-RSSI and/or L1-CLI-RSSI. In one or more cases, the channel and/or interference measurements may be based on periodic, semi-persistent, and/or aperiodic sensing and/or measuring. In another instance, alternatively or in conjunction, the potential aggressor WTRU may be configured to receive SRS signals and/or measure SRS-RSRP from one or more of the potential victim WTRUs. In an example, for the cases in which the measured SRS-RSRP is higher than respective threshold, the potential aggressor WTRU may request to prevent and/or avoid respective granted resources. In another example, the potential victim WTRUs may transmit beamformed SRS signals to the potential aggressor WTRU. In one or more cases, the SRS-based measurements may be based on periodic, semi-persistent, and/or aperiodic sensing and/or measuring.

The WTRU may determine to use and/or avoid one or more of the granted resources based on a potential aggressor WTRU receiving a trigger to sense and/or measure the channel and/or interference quality in one or more of the granted resources based on one or more events. In one or more cases, the event-based trigger for sensing and/or measuring may be based on reception of one or more NACK signals, for example, from a potential victim WTRU at a gNB. In an example, the potential aggressor WTRU may receive, from its serving gNB/TRP, an indication of the one or more NACK signals, where, for example, the serving gNB/TRP of the potential aggressor WTRU may receive the indication from a second serving gNB/TRP of the potential victim WTRU. The serving gNB/TRP of the potential aggressor WTRU may receive the indication from a second serving gNB/TRP of the potential victim WTRU via, for example, a backhaul signaling (e.g., exchange) between the serving gNB/TRP and the second gNB/TRP. For example, for the cases in which the number of NACK signals received from one or more of potential victim WTRUs reaches a threshold (e.g., a maximum number of NACK signals) within a time duration (e.g., based on a timer), the gNB may trigger an event-based channel sensing and/or measurement for one or more potential aggressor WTRUs. In one or more cases, the potential aggressor WTRU may be triggered to measure reference signals based on an aperiodic resource configuration. The reference signals may include, for example, but not limited to, ZP-CSI-RS, NZP-CSI-RS, CLI-RSSI, L1-CLI-RSSI and/or SRS.

The WTRU may send the request to use and/or switch to a granted resource to a gNB based on one or more of: explicit signaling; an associated uplink resource; a channel and/or interference reporting; and/or receiving a confirmation from a gNB on the WTRU request.

The WTRU may send the request to use and/or switch to a granted resource to a gNB based on explicit signaling. The WTRU may send the request to the gNB based on explicit signaling, for example, via one or more of PUCCH, PUSCH, MAC CE, and PRACH. In an example, the WTRU may be configured with one or more granted resources. The WTRU may request a granted resource of the one or more granted resources based on the configuration. In an example, the indication corresponding to the request may be one or more of: an indication of grant index; and/or an indication of the subbands and/or frequency resources.

The WTRU may send the request to use and/or switch to a granted resource to a gNB based on an associated uplink resource. In an example, the WTRU may be configured with a first uplink resource associated with a first granted resource. In another example, the WTRU may be configured with a second uplink resource associated with a second granted resources. In another example, the WTRU may be configured with a first uplink resource associated with a first granted resource and a second uplink resource associated with a second granted resources. For the cases in which the WTRU transmits an uplink signal via the first uplink, the WTRU and the gNB may determine the first granted resources. For the cases in which the WTRU transmits an uplink signal via the second uplink resource, the WTRU and/or the gNB may determine the second granted resource. The uplink signal may be, for example, but not limited to, one or more of following: a scheduling request, a HARQ ACK/NACK, and/or a PRACH.

The WTRU may send the request to use and/or switch to a granted resource to a gNB based on channel and/or interference reporting. In an example, the WTRU may be configured with a first configuration associated with a first granted resource(s). In another example, the WTRU may be configured with a second configuration associated with a second granted resource(s). In another example, the WTRU may be configured with a first configuration associated with a first granted resource(s) and a second configuration associated with a second granted resource(s). In an example, based on the configuration, one or more of following may apply: the WTRU may report a preferred configuration between the first configuration and the second configuration; the WTRU may report a first channel and/or interference report; the WTRU and the gNB may determine granted resources.

The WTRU may report a preferred configuration between the first configuration and the second configuration. For example, for the cases in which the WTRU reports the first configuration, the WTRU and the gNB may determine the first granted resources. In another example, for the cases in which the WTRU reports the second configuration, the WTRU and the gNB may determine the second granted resources.

The WTRU may report a first channel and/or interference (e.g., CSI, SRS, CLI, and the like) report. For example, the WTRU may report the first channel and/or interference report based on the first configuration. In one or more cases, the WTRU may report a second channel and/or interference report. For example, the WTRU may report a second channel and/or interference report based on the second configuration.

The WTRU and the gNB may determine a granted resources based on the first channel and/or interference report and the second channel and/or interference report. For example, for the cases in which a first channel quality of the first CSI report is lower than or equal to a second channel quality of the second CSI report, the WTRU and the gNB may determine the second granted resource. In another example, for the cases in which the first channel quality is higher than the second quality, the WTRU and the gNB may determine the first granted resource. The first channel quality and the second channel quality may be, for example, but not limited to, one or more of CQI, L1-RSRP, L1-SINR, and the like. In another example, for the cases in which a first interference quality of the first interference report is higher than or equal to a second interference quality of the second interference report, the WTRU and the gNB may determine the second granted resource. In another example, for the cases in which the first interference quality is lower than the second quality, the WTRU and the gNB may determine the first granted resource. The first and second interference quality may be, for example, but not limited to, one or more of CLI-RSSI, SRS-RSRP, L1-CLI-RSSI, and the like.

The first configuration and the second configuration may be one or more of: a CSI report configuration, a CSI-RS resource, a CSI-RS resource set, a BWP and/or subbands for CSI reporting. In one or more cases, the first configuration and the second configuration may be one or more of: a SRS report configuration, a SRS resource, a SRS resource set, a BWP and/or subbands for SRS reporting. In one or more cases, the first configuration and the second configuration may be one or more of: a CLI report configuration, a CLI resource, a CLI resource set, a BWP and/or subbands for CLI reporting. In one or more cases, the first configuration and the second configuration may be one or more of: a CSI report configuration, a CSI-RS resource, a CSI-RS resource set, a BWP and/or subbands for CSI reporting; a SRS report configuration, a SRS resource, a SRS resource set, a BWP and/or subbands for SRS reporting; a CLI report configuration, a CLI resource, a CLI resource set, a BWP and/or subbands for CLI reporting.

The WTRU may receive a confirmation from a gNB on the WTRU request. In an example, the WTRU may receive a confirmation PDCCH. For example, the WTRU may receive a confirmation PDCCH via a dedicated CORESET for gNB confirmation and/or MAC CE. In one or more cases, the WTRU may experience a time gap from a PDCCH reception. The time gap may be, for example, for X symbols/slots/ms. For the cases in which the WTRU experiences the time gap from the PDCCH reception (e.g., from a first symbol or last symbol of PDCCH reception), the WTRU may use, avoid, and/or switch to the requested granted resources for the WTRU's operation.

In a second mode of operation (e.g., a dynamic determination), the WTRU may determine a granted resource out of one or more of the granted resources based on a combination of a gNB indication and a WTRU report/request. In one or more cases, a combined method of gNB indication and WTRU report may be supported. For example, one or more of following may apply. a WTRU may receive an indication of one or more granted resources from a gNB; a WTRU may request one or more granted resources to a gNB. For example, the WTRU may receive an indication of one or more granted resources via, for example, indicating a group of granted resources from a gNB. The WTRU may request a granted resource of the one or more granted resources based on the indication. For example, the WTRU may request a granted resource of the one or more granted resources via, for example, one or more of explicit signaling, associated uplink resources, channel and/or interference reporting, and the like. In another example, the WTRU may request one or more granted resources via, for example, one or more of explicit signaling, associated uplink resources, channel and/or interference reporting, and the like, to a gNB. The WTRU may receive an indication of a granted resource of the one or more granted resources based on the indication.

In one or more cases, the WTRU may be configured with a counter and/or timer for granted resources switching. The WTRU may use, receive, and/or be configured with a counter and/or a timer for switching to one or more of the granted resources. In an example, the WTRU may be configured to use one or more of the granted resources, and a counter and/or a timer. In another example, the WTRU may be configured to avoid one or more of the granted resources, and a counter and/or a timer.

The WTRU may switch from first granted resources to the second granted resources based on a determination. For example, the WTRU may switch from first granted resources to the second granted resources based on the determination corresponding to the gNB indication and/or WTRU request. The WTRU may apply the counter, for example, after the determination. For example, the WTRU may increment the value of the counter by a number (e.g., increment the value by one) when the WTRU transmits and/or receives one or more channels and/or signals. For the cases in which the value of the counter is lower than or equal to a threshold, the WTRU may use the second granted resources. The threshold may be, for example a maximum value for the counter. For the cases in which the value of the counter is larger than the threshold, the WTRU may switch from the second granted resources to the first granted resources. In some cases, the initial value of the counter may be zero. In some cases, the counter may be initiated and/or reset when the WTRU switches the granted resources. In some cases, the counter and the threshold may be predefined. In some cases, the counter and the threshold may be indicated via, for example, MAC CE and/or DCI. In some cases, the counter and the threshold may be RRC configured. In some cases, the counter and the threshold may be predefined, indicated, , and/or RRC configured.

The WTRU may switch from the first granted resources to the second granted resources based on a determination. For example, the WTRU may switch from the first granted resources to the second granted resources based on the determination corresponding to the gNB indication and/or WTRU request. the WTRU may apply the timer, for example, after the determination. In an example, if the timer has not expired, the WTRU may use the second granted resources. In another example, if the timer expires, the WTRU may switch from the second granted resources to the first granted resources. In some cases, the timer may be initiated and/or started when the WTRU switches the granted resources. In some cases, the timer may be predefined. In some cases, the timer may be indicated via, for example, MAC CE and/or DCI. In some cases, the timer may be RRC configured. In some cases, the timer may be predefined, indicated, and/or RRC configured

The transmission/reception of the one or more channels and/or signals may be one or more of following: reception of channels and signals, and transmission of channels and signals. The reception of channels and signals may, for example, correspond to reception of one or more of a PDCCH, PDSCH, CSI-RS, SSB (including PBCH), PRS, DM-RS, and the like. The transmission of channels and signals may, for example, correspond to transmission of one or more of a PRACH, PUCCH, PUSCH, SRS, DM-RS, and the like.

The WTRU may be configured for band-edge CLI prevention. The WTRU (e.g., a potential aggressor WTRU) may determine and/or receive an indication that the WTRU is causing interference. For example, the WTRU may determine and/or receive the indication based on a gNB indication and/or a WTRU sensing/measurement. The WTRU may determine and/or receive the indication that the WTRU is causing interference (e.g., CLI) on one or more victim WTRUs (e.g., band-edge CLI) in one or more of the configured subbands. As such, the WTRU may determine to take preventative actions to reduce the interference. In one or more cases, the WTRU may determine to take preventative actions based on, for example, a gNB indication and/or a WTRU request based on sensing and/or measurement.

The WTRU may be configured or request to switch from first granted resources to the second granted resources. In an example, the second granted resources may include a larger data allocation. As such, the interference (e.g., band-edge CLI) may be reduced due to the larger BWP/subbands included in the second granted resources.

The WTRU may determine, use, and/or be configured with a first power saving/reduced power mode for the first granted resources. In one or more cases, the WTRU may determine, use, and/or be configured with a second power saving/reduced power mode for the second granted resources. In one or more cases, the WTRU may determine, use, and/or be configured with a first power saving/reduced power mode for the first granted resources and a second power saving/reduced power mode for the second granted resources. The WTRU may be configured, be determined to operate, and/or use one or more power saving/reduced power modes, for example, when one or more granted resources are used. In an example, a first power saving/reduced power mode (e.g., WTRU power saving mode) may be a normal mode in which the WTRU may perform transmission and/or reception of a signal in one or more of the granted resources. The WTRU may perform transmission and/or reception of the signal in one or more of the granted resources based on the respective configuration for the granted resources. For example, a first configuration for the first granted resources may indicate the WTRU transmission and/or reception behavior in the first granted resources. That is, based on the first configuration of the first granted resources, the WTRU may determine the transmission and/or reception behavior in the first granted resources. In another example, a second configuration for the second granted resources may indicate the WTRU transmission and/or reception behavior in the second granted resources. That is, based on the second configuration of the second granted resources, the WTRU may determine the transmission and/or reception behavior in the second granted resources. As such, granted resources for power saving and/or reduced power may not be associated. In one or more cases, a second power saving and/or reduced power mode may be a power saving and/or reduced power mode in which the WTRU performs transmission and/or reception of a signal in the first granted resources. The WTRU may perform transmission/reception of the signal in the first granted resources, for example, based on one or more conditions (e.g., interference, CLI, band-edge CLI) in the respective granted resources.

The WTRU may be configured with a group-common indication to manage granted resources. For example, the WTRU may receive a group-common indication on potential interference on one or more granted resources, RB sets, and/or subbands. In an example, the group-common indication may be transmitted to a group of WTRUs. The group of WTRUs may include at least a first set of WTRUs (e.g., potential victim WTRUs) and/or a second set of WTRUs (e.g., potential aggressor WTRUs). In one or more cases, the WTRU may measure and/or report the configured channel and/or interference measurements in the configured resources. For example, upon reception of the group-common indication (e.g., a group-common DCI), the WTRU may measure and/or report the configured channel and/or interference measurements in the configured resources. In some cases, the WTRU (e.g., a potential victim WTRU) may determine to avoid a granted resource and/or a subband. For example, the WTRU may determine to avoid a granted resource and/or a subband based on the received indication and/or based on the performed measurements. In some cases, the WTRU may determine to switch to other granted resources and/or subbands. In some cases, the WTRU (e.g., a potential aggressor WTRU) may determine to avoid a granted resource and/or a subband. For example, the WTRU may determine to avoid a granted resource and/or subband based on the received indication and/or based on the performed measurements. In some cases, the WTRU may determine to use preventative actions. For example, the WTRU may determine to use preventative actions by switching to other granted resources and/or subbands, and/or reducing power techniques. In one or more cases, the WTRU may receive the WTRU-specific and/or a group-common indication on change of the role of the WTRUs. For example, the change of the role of the WTRUs may be, for example, victim WTRUs changing to aggressor WTRUs and vice versa. In some cases, the WTRU may use the channel and/or interference measurement results to avoid causing interference and/or being impacted by the interference (e.g., from potential aggressor WTRUs.

The WTRU may be configured for CLI sensing and/or measuring based on directional SRS-RSRP. In an example, the WTRU may be configured and/or receive signaling indicating one or more TCI states for sensing and/or measuring the interference and/or for SRS reception and measurement. The interference may include, for example, but not limited to, CLI, L1-CLI-RSSI, SRS-RSRP, and the like. In one or more cases, the signaling indicating the one or more TCI states may be configured by DCI, MAC CE, and/or RRC. For example, the WTRU may use at least one spatial domain filter to receive, sense, and/or measure the respective reference signals. In an example, the WTRU may receive the TCI state and/or the SRS resource indicator (SRI) to measure the respective SRS signal (e.g., SRS-RSRP). In one or more cases, one or more of the following may apply. For instance, the WTRU (e.g., a potential victim WTRU) may determine and/or be configured to use a spatial filter. The spatial filter may be the same spatial filter as the one used for receiving reference signal sets indicated by TCI-state for respective CORESETs that, for example, the WTRU uses for monitoring PDCCH. In another instance, the WTRU (e.g., a potential aggressor WTRU) may determine and/or be configured to use the spatial filter to measure the potential impact and/or interference that the spatial filter may cause. For example, the WTRU may determine and/or be configured to use the spatial filter to measure the potential impact and/or interference that the spatial filter may cause, for example, in a direction indicated by the configured TCI-state. In one or more cases, the WTRU may report the directional channel and/or interference sensing and/or measurements to the gNB.

### EDMBODIMENTS

A1. A wireless transmit/receive unit (WTRU) comprising:
   a processor configured to:
   receive configuration information indicating a plurality of sub-bands for cross-link interference (CLI) measurements and respective resources for performing CLI measurements for each of the plurality of sub-bands;
   receive a downlink control information (DCI) indicating resources associated with a first reference sub-band;
   perform a CLI measurement for the first reference sub-band using one or more resources for performing CLI measurements for the first sub-band;
   perform a CLI measurement for at least one other sub-band of the plurality of sub-bands using the respective resources for CLI measurements of the at least one other sub-band based on determining that the CLI measurement for the first sub-band is greater than a threshold; and
   send an indication that the CLI measurement for the sub-band is greater than the threshold.
A2. The WTRU of embodiment A1, wherein the processor is further configured to send information indicating a second sub-band.
A3. The WTRU of embodiment A2, wherein the indicated second sub-band is determined to have a lowest measured CLI among the plurality of sub-bands.
A4. The WTRU of embodiment A1, wherein the processor is further configured to perform the CLI measurement for the first sub-band based on a number of downlink data reception failures for the first sub-band exceeds a first threshold.
A5. The WTRU of embodiment A1, wherein the processor is further configured to perform the CLI measurement for the first sub-band based on a number of Hybrid Automatic Repeat Request Negative Acknowledgements (HARQ NACKs) sent by the WTRU for transmissions in the first sub-band exceeds a second threshold.
A6. The WTRU of embodiment A1, wherein the processor is further configured to perform the CLI measurement for the first sub-band based on an explicit indication from a network.
A7. The WTRU of embodiment A1, wherein the respective resources for performing CLI measurements for each of the plurality of sub-bands comprise one or more of a zero power channel state information reference signal (ZP-CSI-RS), a non-zero power channel state information reference signal (NZP-CSI-RS), or a sounding reference signal (SRS).
A8. The WTRU of embodiment A1, wherein the received DCI comprises a downlink (DL) assignment indicating the first reference sub-band to schedule a physical downlink shared channel (PDSCH).
A9. The WTRU of embodiment A1, wherein the processor is further configured to perform the CLI measurement for the at least one other sub-band by performing one or more of a physical layer cross-link interference received signal strength indicator (L1-CLI-RSSI) measurement, a sub-band-wise CLI measurement, or a delta CLI measurement.
A10. The WTRU of embodiment A9, wherein the CLI measurement comprises an overlapping CLI, a partial overlapping CLI, or a non-overlapping sub-band CLI.
A11. A method comprising:
   receiving configuration information indicating a plurality of sub-bands for cross-link interference (CLI) measurements and respective resources for performing CLI measurements for each of the plurality of sub-bands;
   receiving a downlink control information (DCI) indicating resources associated with a first reference sub-band;
   performing a CLI measurement for the first reference sub-band using one or more resources for performing CLI measurements for the first sub-band;
   performing a CLI measurement for at least one other sub-band of the plurality of sub-bands using the respective resources for CLI measurements of the at least one other sub-band based on determining that the CLI measurement for the first sub-band is greater than a threshold; and
   sending an indication that the CLI measurement for the sub-band is greater than the threshold.
A12. The method of embodiment A11, further comprising:
   sending information indicating a second sub-band.
A13. The method of embodiment A12, wherein the indicated second sub-band is determined to have a lowest measured CLI among the plurality of sub-bands.
A14. The method of embodiment A11, further comprising:
   performing the CLI measurement for the first sub-band based on a number of downlink data reception failures for the first sub-band exceeds a first threshold.
A15. The method of embodiment A11, further comprising:
   performing the CLI measurement for the first sub-band based on a number of Hybrid Automatic Repeat Request Negative Acknowledgements (HARQ NACKs) sent by the WTRU for transmissions in the first sub-band exceeds a second threshold.
A16. The method of embodiment A11, further comprising:
   performing the CLI measurement for the first sub-band based on an explicit indication from a network.
A17. The method of embodiment A11, wherein the respective resources for performing CLI measurements for each of the plurality of sub-bands comprise one or more of a zero power channel state information reference signal (ZP-CSI-RS), a non-zero power channel state information reference signal (NZP-CSI-RS), or a sounding reference signal (SRS).
A18. The method of embodiment A11, wherein the received DCI comprises a downlink (DL) assignment indicating the first reference sub-band to schedule a physical downlink shared channel (PDSCH).
A19. The method of embodiment A11, further comprising:
   performing the CLI measurement for the at least one other sub-band by performing one or more of a physical layer cross-link interference received signal strength indicator (L1-CLI-RSSI) measurement, a sub-band-wise CLI measurement, or a delta CLI measurement.
A20. The method of embodiment A19, wherein the CLI measurement comprises an overlapping CLI, a partial overlapping CLI, or a non-overlapping sub-band CLI.

## Claims

1. A wireless transmit/receive unit, WTRU, comprising:
a transceiver; and
a processor configured to:
receive, via the transceiver, configuration information indicating one or more transmission configuration indicator, TCI, states;
determine, based on the one or more TCI states, a spatial domain filter to be used for measuring directional interference based on one or more reference signals, RSs, transmitted by one or more additional WTRUs;
receive, via the transceiver and the spatial domain filter, the one or more RSs transmitted by the one or more additional WTRUs;
perform one or more directional interference measurements on the one or more RSs based on the spatial domain filter; and
send, via the transceiver, an indication of the one or more directional interference measurements.

2. The WTRU of claim 1, wherein the configuration information indicating the one or more TCI states indicates that the spatial domain filter is to be used for receiving one or more reference signal sets that the WTRU is to use for monitoring a physical downlink control channel, PDCCH.

3. The WTRU of claim 1 or 2, wherein the one or more RSs transmitted by the one or more additional WTRUs comprise one or more sounding reference signals, SRSs.

4. The WTRU of claim 3, wherein the one or more directional interference measurements comprise at least one SRS reference signal received power, SRS-RSRP, measurement.

5. The WTRU of claim 3 or 4, wherein the configuration information further indicates one or more respective SRS resource indicators, SRIs, for the one or more SRSs, and wherein the processor is further configured to:
determine, based on the one or more respective SRIs, one or more respective SRS resource sets to use for receiving the one or more SRSs;
receive, via the transceiver, the spatial domain filter, and the one or more respective SRS resource sets, the one or more SRSs; and
perform the one or more directional interference measurements on the one or more SRSs based on the spatial domain filter and the one or more respective SRS resource sets.

6. The WTRU of any of claims 1-5, wherein the one or more directional interference measurements comprise at least one cross-link interference, CLI, measurement.

7. The WTRU of claim 6, wherein the at least one CLI measurement comprises a level one, L1, CLI reference signal strength indicator, L1-CLI-RSSI.

8. The WTRU of any of claims 1-7, wherein the processor is further configured to:
determine that a number of downlink, DL, reception failures that have occurred with a time window exceeds a threshold number of DL reception failures; and
in response to the number of DL reception failures exceeding the threshold number of DL reception failures, determine, based on the one or more TCI states, the spatial domain filter to be used for measuring directional interference based on the one or more reference signals RSs transmitted by the one or more additional WTRUs.

9. The WTRU of any of claims 1-7, wherein the processor is further configured to:
receive an indication that at least one sub-band, SB, is to be avoided; and
in response to receiving the indication that the at least one SB is to be avoided, determine, based on the one or more TCI states, the spatial domain filter to be used for measuring directional interference based on the one or more reference signals RSs transmitted by the one or more additional WTRUs.

10. The WTRU of any of claims 1-9, wherein the processor is further configured to:
determine that the one or more directional interference measurements exceed a threshold directional interference measurement value, wherein the one or more directional interference measurements are associated with one or more granted resources; and
in response to the one or more directional interference measurements exceeding the threshold directional interference measurement value, send a request to avoid the one or more granted resources.

11. A method performed by a wireless transmit/receive unit, WTRU, the method comprising:
receiving, via a transceiver, configuration information indicating one or more transmission configuration indicator, TCI, states;
determining, based on the one or more TCI states, a spatial domain filter to be used for measuring directional interference based on one or more reference signals, RSs, transmitted by one or more additional WTRUs;
receiving, via the transceiver and the spatial domain filter, the one or more RSs transmitted by the one or more additional WTRUs;
performing one or more directional interference measurements on the one or more RSs based on the spatial domain filter; and
sending, via the transceiver, an indication of the one or more directional interference measurements.

12. The method of claim 11, wherein the configuration information indicating the one or more TCI states indicates that the spatial domain filter is to be used for receiving one or more reference signal sets that the WTRU is to use for monitoring a physical downlink control channel, PDCCH.

13. The method of claim 11 or 12, wherein the one or more RSs transmitted by the one or more additional WTRUs comprise one or more sounding reference signals, SRSs.

14. The method of claim 13, wherein the one or more directional interference measurements comprise at least one SRS reference signal received power, SRS-RSRP, measurement.

15. The method of claim 13 or 14, wherein the configuration information further indicates one or more respective SRS resource indicators, SRIs, for the one or more SRSs, and wherein the method further comprises:
determining, based on the one or more respective SRIs, one or more respective SRS resource sets to use for receiving the one or more SRSs;
receiving, via the transceiver, the spatial domain filter, and the one or more respective SRS resource sets, the one or more SRSs; and
performing the one or more directional interference measurements on the one or more SRSs based on the spatial domain filter and the one or more respective SRS resource sets.

16. The method of any of claims 11-15, wherein the one or more directional interference measurements comprise at least one cross-link interference, CLI, measurement.

17. The method of claim 16, wherein the at least one CLI measurement comprises a level one, L1, CLI reference signal strength indicator, L1-CLI-RSSI.

18. The method of any of claims 11-17, wherein the method further comprises:
determining that a number of downlink, DL, reception failures that have occurred with a time window exceeds a threshold number of DL reception failures; and
in response to the number of DL reception failures exceeding the threshold number of DL reception failures, determining, based on the one or more TCI states, the spatial domain filter to be used for measuring directional interference based on the one or more reference signals RSs transmitted by the one or more additional WTRUs.

19. The method of any of claims 11-17, wherein the method further comprises:
receiving an indication that at least one sub-band, SB, is to be avoided; and
in response to receiving the indication that the at least one SB is to be avoided, determining, based on the one or more TCI states, the spatial domain filter to be used for measuring directional interference based on the one or more reference signals RSs transmitted by the one or more additional WTRUs.

20. The method of any of claims 11-19, wherein the method further comprises:
determining that the one or more directional interference measurements exceed a threshold directional interference measurement value, wherein the one or more directional interference measurements are associated with one or more granted resources; and
in response to the one or more directional interference measurements exceeding the threshold directional interference measurement value, sending a request to avoid the one or more granted resources.
